# EUROPÄISCHE PATENTSCHRIFT

(11) **EP 3 848 176 B1**
(45) Veröffentlichungstag und Bekanntmachung des Hinweises auf die Patenterteilung: **03.01.2024**
(21) Anmeldenummer: 20209981.8
(22) Anmeldetag: 26.11.2020
(51) Int. Cl.: B65D 25/14, B65D 43/02, B29C 45/00, B29C 45/14, B29C 45/36

(54) **BEHÄLTER MIT IN-MOULD-LABELN, VERFAHREN UND VORRICHTUNGEN ZU DESSEN HERSTELLUNG SOWIE GEBINDE**
CONTAINER WITH IN-MOULD LABELS, METHOD AND DEVICES FOR ITS MANUFACTURE AS WELL AS CONTAINER WITH A LID
RÉCIPIENT POURVU D'ÉTIQUETTES DANS LE MOULE, PROCÉDÉ ET DISPOSITIFS DE FABRICATION, AINSI QUE RÉCIPIENT AVEC COUVERCLE

(30) Priorität: 20.12.2019 DE 102019135439
(43) Veröffentlichungstag der Anmeldung: 14.07.2021
(73) Patentinhaber: Saier Verpackungstechnik GmbH & Co. KG, 72275 Alpirsbach (DE)
(72) Erfinder: Saier, Hanns-Ulrich, 72275 Alpirsbach (DE)
(74) Vertreter: Kohler Schmid Möbus Patentanwälte

(56) Entgegenhaltungen:
- EP-A1- 0 253 160
- EP-A1- 0 594 921
- EP-A1- 1 795 452
- EP-A1- 2 314 518
- EP-A2- 1 033 239
- EP-A2- 2 397 299
- EP-A2- 2 731 885

## Beschreibung

Die Erfindung betrifft einen (Verpackungs-)Behälter aus Kunststoff in Form eines Eimers, mit einem Boden und mit einer umlaufenden Seitenwand, die im Bereich einer Öffnung des Behälters einen umlaufenden Rand mit einem Eingriffsbereich aufweist, wobei der Eingriffsbereich ein Klemmprofil zum Zusammenwirken mit einem Klemmprofil an einem Deckel aufweist, um die Öffnung des Behälters zu verschließen, wobei an einer Innenseite der umlaufenden Seitenwand und an einer Innenseite des Bodens mindestens ein In-Mould-Label angebracht ist. Die Erfindung betrifft auch ein Gebinde, welches einen solchen Behälter sowie einen Deckel umfasst. Die Erfindung betrifft weiterhin ein Verfahren zur Herstellung des eingangs genannten Behälters.

Unter einem Eimer wird im Sinne dieser Anmeldung ein Behälter verstanden, der eine Seitenwand aufweist, die eine konische Geometrie aufweist, um mehrere Eimer ineinander stapeln zu können. Unter einer Dose wird ein Behälter verstanden, der eine im Wesentlichen zylindrische Seitenwand aufweist.

Im Bereich der Öffnung weist der Behälter typischerweise einen umlaufenden Rand auf, an dem ein Eingriffsbereich zum Zusammenwirken mit dem Deckel gebildet ist. Der Eingriffsbereich kann beispielsweise ein Klemmprofil aufweisen, das mit einem Klemmprofil am Deckel bzw. an der Innenseite des Randes des Deckels zusammenwirkt, um die Öffnung des Behälters idealerweise dichtend zu verschließen.

(Verpackungs-)Behälter aus Kunststoff (wie auch dazu passende Deckel) werden in zunehmendem Maße schon während des Formgebungsprozesses mittels einer in das Formwerkzeug eingelegten und zuvor ggf. bedruckten Folie (= "In-Mould-Label" oder abgekürzt "IML") versehen. Der Behälter kann an der Außenseite der umlaufenden Seitenwand vollumfänglich mit einem In-Mould-Label versehen werden, d.h. das In-Mould-Label kann zumindest in Umfangsrichtung die gesamte Außenseite der umlaufenden Seitenwand des Verpackungsbehälters überdecken. Alternativ kann das In-Mould-Label nur in einem Teilbereich umfangs- und/oder höhenachsenseitig an der Seitenwand des Behälters angebracht sein. Auch der Boden des Behälters kann an seiner Außenseite oder ggf. an seiner Innenseite mit einem In-Mould-Label versehen sein.

Neben einer dekorativen Funktion können In-Mould-Label auch andere Funktionen übernehmen, beispielsweise können diese - je nach Material bzw. Material-Kombination - unterschiedliche vorteilhafte Barriere-Eigenschaftsprofile aufweisen. Durch entsprechende Materialauswahl können die In-Mould-Label die Barriere-Eigenschaften des Behälters gegen Sauerstoff, Wasserdampf oder auch die Beständigkeit gegenüber aggressiven Füllgütern verbessern. Bei der Anbringung eines In-Mould-Labels an der Außenseite der Seitenwand des Behälters ist im Bereich des (Doppel-)Randes, an dem der Eingriffsbereich gebildet ist, sowie im Übergangsbereich zwischen der Seitenwand und dem Boden in der Regel keine oder eine unzureichende Barriere-Wirkung gegeben. Im Bereich des (Doppel-)Randes ist zudem keine Abdeckung des Füllguts durch das an der Außenseite der Seitenwand angebrachte In-Mould-Label möglich, wenn der Behälter aus einem transparenten Material gebildet ist. Durch die Anbringung von In-Mould-Labeln an der Außenseite des Behälters kann zudem das Kunststoff-Material des Behälters nicht vor aggressiven Füllgütern geschützt werden.

Eine Barriere-Funktion kann auch mit Hilfe einer innenseitigen Beschichtung des Behälters realisiert werden. Das Aufbringen einer solchen Beschichtung ist ein mehrstufiger Prozess, der teuer in der Herstellung ist und der nicht zu einer Stabilitätszunahme des Behälters führt. Auch lässt sich eine solche Beschichtung nicht bzw. nur schwierig als zusätzliche Werbefläche verwenden.

Auch durch das nachträgliche Einbringen eines Labels in Form eines so genannten Form-Inliners in den Behälter bzw. das nachträgliche Anbringen eines Labels bzw. eines Form-Inliners an der Außenseite des Behälters kann eine Barriere-Wirkung erzielt werden. Das nachträgliche Einbringen eines Form-Inliners in den Behälter bietet in der Regel keine feste Verbindung mit der Innenseite der Behälterwand und ist in der Regel nicht formgetreu, d.h. der Form-Inliner folgt ggf. nicht exakt der Geometrie des Behälters.

Eine weitere Möglichkeit zur Erzeugung einer Barriere-Wirkung besteht in der Herstellung eines Sandwich-Behälters, der beispielsweise einen Kern aus einem ersten Kunststoff-Material aufweist, der von einer Hülle aus einem zweien Kunststoff-Material umgeben ist. In der Nähe des Eingriffsbereichs, der bei einem Behälter in Form eines Eimers typischerweise an einem Doppelrand gebildet ist, ist bei einem solchen Eimer in der Regel keine Barrierewirkung gegeben. Auch bei einem Sandwich-Behälter kann die Innenseite des Behälters nicht als Werbefläche genutzt werden und bei einem solchen Behälter wird das Kunststoff-Material an der Innenseite des Behälters nicht wirksam vor aggressiven Füllgütern geschützt.

In der EP2314518B1 ist ein Verfahren zur Bereitstellung eines Behälters für flüssige Produkte bekannt geworden, umfassend: Bereitstellen eines Pfropfens mit einer Form, die komplementär zur Innenseite des Behälters ist, Anbringen einer Abdeckschicht auf die Seitenfläche des Pfropfens, Anbringen eines Abdeckbodens auf die Basis des Pfropfens, Falten einer Umfangskante des Abdeckbodens auf die Abdeckschicht, Einsetzen des abgedeckten Pfropfens in den Behälter und Anbringen der Abdeckschicht mit dem Boden auf die Innenfläche des Behälters, sowie Herausziehen des Pfropfens und Falten der freien Kante der Abdeckschicht um den Behälter, um ein Greifelement zur Verfügung zu stellen, das das Entfernen der Abdeckschicht ermöglicht.

In der EP 1 796 889 B1 ist beschrieben, dass ein Behälter aus Kunststoff mindestens ein innenseitiges In-Mould-Label aufweisen kann, bei dem es sich beispielsweise um eine Folie handeln kann, die eine geringe Wasserstoff-Permeabilität aufweist. Das In-Mould-Label kann mehrere Folien-Lagen aufweisen, es kann sich um ein Laminat handeln und dieses kann ggf. metallisiert sein. Das mindestens eine innenseitige In-Mould-Label kann mindestens 50% der Innenfläche des Behälters bedecken, ggf. kann auch die gesamte Innenseite des Behälters mit dem In-Mould-Label bedeckt sein. Auch der Deckel eines solchen Behälters kann ggf. an seiner Innenseite ein In-Mould-Label aufweisen, vgl. auch die EP 1795452A1.

In der EP 1 796 889 B1 ist nicht beschrieben, wie sichergestellt werden kann, dass bei der Herstellung des Behälters mit dem bzw. den innenseitigen In-Mould-Labeln die Formtreue gewährleistet werden kann, genauer gesagt wie ein unerwünschtes Hinterspritzen der innenseitigen In-Mould-Label durch das in den Form-Hohlraum eingespritzte Kunststoff-Material verhindert werden kann. Ein solches ungewolltes Hinterspritzen führt zu einer Abweichung der Geometrie des Behälters von der gewollten Geometrie, so dass die Formtreue bei der Herstellung des Behälters nicht sichergestellt ist.

Das EP0253160A beschreibt einen Eimer mit einem Innenwandlabel und einem Innenbodenlabel.

Das EP1795452A beschreibt ein Spritzgussverfahren, bei dem In-Mold-Labels zum Einsatz kommen.

Der Erfindung liegt die Aufgabe zugrunde, einen Behälter und ein Gebinde der eingangs genannten Art sowie ein Verfahren zur Herstellung eines solchen Behälters bereitzustellen, bei dem die Formtreue bei der Herstellung des Behälters bzw. bei dem eine Barriere-Wirkung sichergestellt werden kann.

Diese Aufgabe wird gemäß einem ersten Aspekt gelöst durch einen Behälter der eingangs genannten Art, bei dem an der Innenseite der Seitenwand ein wandseitiges In-Mould-Label angebracht ist, das sich bis zu einem Kontaktbereich mit einem Deckel erstreckt, und bei dem an der Innenseite des Bodens ein bodenseitiges In-Mould-Label angebracht ist, wobei das bodenseitige In-Mould-Label einen sich entlang der Innenseite der Seitenwand erstreckenden, typischerweise umlaufenden Abschnitt aufweist, der an seiner Außenseite mit einer Innenseite des wandseitigen In-Mould-Labels (in einem dem Boden benachbarten Abschnitt) überlappt.

Wird der Behälter an der Innenseite der Seitenwand mit einem wandseitigen In-Mould-Label versehen, besteht das Problem, dass beim Einspritzen des Kunststoff-Materials in den Form-Hohlraum bzw. in die Kavität ggf. Kunststoff-Material zwischen das wandseitige In-Mould-Label und den Formkern gelangt, was dazu führt, dass das wandseitige In-Mould-Label zumindest teilweise hinterspritzt wird, so dass dieses teilweise in die Behälterwand eingebettet wird und nicht wie gewünscht an der Innenseite der Seitenwand des Behälters angebracht wird. Die Geometrie eines solchen Behälters mit hinterspritztem In-Mould-Label weicht zudem von der vorgegebenen Geometrie ab.

Um dieses Problem zu vermeiden, weist das bodenseitige In-Mould-Label einen Abschnitt auf, der umfangsseitig über eine Stirnseite des Formkerns übersteht und der beim Einspritzen des Kunststoff-Materials in den Form-Hohlraum in Richtung der Stirnseite der Seitenwand umgeklappt und an die Mantelfläche des Formkerns angeformt wird, so dass der Abschnitt mit dem wandseitigen In-Mould-Label, genauer gesagt mit einem dem Boden benachbarten Abschnitt des wandseitigen In-Mould-Labels, überlappt. Auf diese Weise kann verhindert werden, dass eine dem Boden zugewandte Kante des wandseitigen In-Mould-Labels beim Einspritzen des Kunststoff-Materials hinterspritzt wird und sich hierbei von dem Formkern ablöst.

Der erfindungsgemäße Behälter weist an seiner Innenseite ein wandseitiges In-Mould-Label und ein bodenseitiges In-Mould-Label auf.

Nachfolgend wird zur Vereinfachung der Darstellung in Fällen, in denen keine Unterscheidung zwischen nachträglich angebrachten Labeln und In-Mould-Labeln erforderlich ist, für beide Arten von Labeln die Bezeichnung (In-Mould-)Label verwendet.

Grundsätzlich ist es günstig, wenn ein bodenseitiges In-Mould-Label die Innenseite des Bodens des Behälters vollständig überdeckt und wenn das wandseitige In-Mould-Label in Umfangsrichtung vollständig umläuft und sich zumindest bis zu dem Kontaktbereich mit dem Deckel erstreckt, da auf diese Weise eine vollständige Barriere-Wirkung erzeugt werden kann. Es ist aber ebenfalls möglich, dass das bodenseitige In-Mould-Label nur einen Teilbereich der Innenseite des Bodens überdeckt und das wandseitige In-Mould-Label nur einen Teilbereich der Innenseite der umlaufenden Seitenwand überdeckt. Es ist zudem möglich, dass an der Innenseite des Bodens und/oder an der Innenseite der umlaufenden Seitenwand zwei oder mehr In-Mould-Label angebracht sind, die sich bevorzugt teilweise überlappen.

Bevorzugt überlappt der überlappende Abschnitt des bodenseitigen In-Mould-Labels oder des bodenseitigen Labels an seiner der Innenseite der Seitenwand abgewandten Außenseite mit einer der Seitenwand zugewandten Innenseite des wandseitigen In-Mould-Labels. Bei der Herstellung des Behälters erfolgt die Einspritzung des Kunststoff-Materials typischerweise von der Matrize aus, in die der Formkern zur Bildung des Form-Hohlraums eingeführt wird, und zwar an mindestens einer Einspritz-Position, die der Stirnseite des Formkerns gegenüberliegt. Beim Einspritzen des Kunststoff-Materials wird in diesem Fall der überstehende Abschnitt des bodenseitigen In-Mould-Labels durch den Schmelze-Strom des eingespritzten Kunststoffs in Richtung der Mantelfläche des Formkerns umgeklappt, an welcher das wandseitige In-Mould-Label angebracht ist, so dass der Abschnitt des bodenseitigen In-Mould-Labels an seiner Außenseite mit der Innenseite des wandseitigen In-Mould-Labels überlappt.

Bevorzugt ist das bodenseitige In-Mould-Label in dem überlappenden Abschnitt mit dem wandseitigen In-Mould-Label fest verbunden, insbesondere verschweißt. Grundsätzlich ist in dem Bereich, in dem das bodenseitige In-Mould-Label mit dem wandseitigen In-Mould-Label überlappt, eine Barriere-Wirkung gegeben. Um zu vermeiden, dass in dem Zwischenraum bzw. in dem (schmalen) Spalt zwischen der Außenseite des wandseitigen In-Mould-Labels und der Innenseite des bodenseitigen In-Mould-Labels eine reduzierte Barriere-Wirkung vorhanden ist, ist es günstig, die beiden In-Mould-Label in dem Bereich der Überlappung fest miteinander zu verbinden, insbesondere miteinander zu verschweißen. Das Kunststoff-Schweißen erfolgt typischerweise durch Zuführung von Wärme, die beispielsweise mit Hilfe von einem oder von mehreren beheizbaren Kontaktelementen über die Außenseite des wandseitigen In-Mould-Labels zugeführt wird. Auch die Herstellung einer anderen Art der festen Verbindung, beispielsweise durch Ultraschall-Schweißen, ist möglich.

Bevorzugt überlappen zwei in Umfangsrichtung gegenüber liegende Kanten des wandseitigen In-Mould-Labels in einem Überlappungsbereich und sind an dem Überlappungsbereich fest miteinander verbunden, insbesondere verschweißt. Das umfangsseitige Verschweißen des wandseitigen, vollständig umlaufenden In-Mould-Labels ist günstig, um die volle Barriere-Wirkung sicherzustellen. An Stelle einer festen Verbindung durch Verschweißen ist in diesem Fall - abhängig vom Füllgut - ggf. auch eine feste Verbindung unter Verwendung eines Fügemittels, z.B. eines Klebers, möglich.

Bevorzugt ist das wandseitige In-Mould-Label mit der Innenseite der umlaufenden Seitenwand fest verbunden und/oder das bodenseitige In-Mould-Label ist mit der Innenseite des Bodens fest verbunden. In diesem Fall ist/sind das wandseitige In-Mould-Label und/oder das bodenseitige In-Mould-Label zumindest an ihrer der Innenseite der Seitenwand bzw. der Innenseite des Bodens zugewandten Innenseite aus einem mit dem Kunststoff-Material des Behälters kompatiblen Kunststoff-Material gebildet, so dass sich diese bei der Herstellung des Behälters dauerhaft mit dem Kunstsoff-Material des Behälters verbinden und mit diesem einen gemeinsamen Schmelze-Verbund eingehen.

Bei einer Ausführungsform ist das wandseitige In-Mould-Label als Ganzes lösbar mit der Innenseite der umlaufenden Seitenwand verbunden und/oder das bodenseitige In-Mould-Label ist als Ganzes lösbar mit der Innenseite des Bodens und (in dem überlappenden Abschnitt) mit der Seitenwand verbunden. Es kann günstig sein, wenn die innenseitigen In-Mould-Label beispielsweise nach dem Gebrauchsende des Behälters vollständig von diesem getrennt werden können, z.B. um das Kunststoff-Material des Behälters, an dem in diesem Fall ggf. kein Füllgut mehr anhaftet, einfacher recyceln zu können.

Die lösbare Verbindung zwischen dem jeweiligen In-Mould-Label und der Innenseite des Bodens bzw. der Seitenwand kann dadurch erreicht werden, dass die Innenseite des wandseitigen In-Mould-Labels bzw. des bodenseitigen In-Mould-Labels aus einem Kunststoff-Material (in der Regel in Form einer Folie) gebildet ist, das nicht mit dem Kunststoff-Material des Behälters kompatibel ist, so dass bei der Herstellung des Behälters kein gemeinsamer Schmelze-Verbund gebildet wird. Auf diese Weise können die In-Mould-Label in der Art eines lösbaren und konturgetreuen Inliners verwendet werden. Im Gegensatz zu einem Inliner sind die (lösbaren) In-Mould-Label in das Material des Behälters eingebettet: Beispielsweise steht das wandseitige In-Mould-Label typischerweise in den Bereichen, in denen die Innenseite der Seitenwand nicht von dem wandseitigen In-Mould-Label bedeckt wird, nicht über die Innenseite der Seitenwand vor. Auch sind die In-Mould-Label in diesem Fall nicht lose in den Behälter eingelegt, sondern müssen von einem Bediener aktiv von dem Behälter gelöst bzw. abgezogen werden.

Es kann günstig sein, wenn das wandseitige In-Mould-Label und/oder das bodenseitige In-Mould-Label nicht als Ganzes, sondern nur partiell, d.h. in einem oder in mehreren Teilbereichen, lösbar mit dem Behälter verbunden sind, während in anderen Teilbereichen eine feste (dauerhafte) Verbindung zwischen dem jeweiligen In-Mould-Label und dem Kunststoff-Material des Behälters besteht. In den Teilbereichen, in denen eine feste Verbindung besteht, kann das jeweilige In-Mould-Label an der Innenseite des Bodens bzw. der Seitenwand fixiert werden. Um an ein- und demselben In-Mould-Label Teilbereiche mit unterschiedlichen Eigenschaften zu schaffen, kann das In-Mould-Label ggf. unterschiedliche Kunststoff-Materialien für die jeweiligen Teilbereiche aufweisen.

Bei einer weiteren Ausführungsform ist an dem wandseitigen In-Mould-Label mindestens eine Abziehhilfe, bevorzugt eine Abziehlasche, angeformt, die einen Teilbereich des wandseitigen In-Mould-Labels an seiner Außenseite überdeckt und die sich bevorzugt bis in den Kontaktbereich mit dem Deckel erstreckt, wobei die Abziehhilfe bevorzugt angrenzend zu einem Überlappungsbereich gebildet ist, an dem zwei in Umfangsrichtung gegenüber liegende Kanten des wandseitigen In-Mould-Labels sich überlappen und fest miteinander verbunden, insbesondere verschweißt sind.

Bei der Abziehhilfe kann es sich beispielsweise um eine Abziehlasche oder dergleichen handeln, die in der Regel an das jeweilige In-Mould-Label angeformt ist. Die Abziehhilfe erstreckt sich entlang der Außenseite des In-Mould-Labels und ragt in den Innenraum des Behälters hinein. Mit Hilfe einer solchen Abziehhilfe, die von einem Bediener ergriffen werden kann, wird das Abziehen bzw. Ablösen des jeweiligen In-Mould-Labels von dem Behälter vereinfacht. Das Ergreifen der Abziehhilfe wird für den Bediener erleichtert, wenn die Abziehhilfe im oberen Bereich des Behälters bzw. des wandseitigen In-Mould-Labels, insbesondere auf Höhe des Deckels angeordnet ist bzw. sich in den Kontaktbereich mit dem Deckel erstreckt.

Die Abziehhilfe kann insbesondere an eine Kante des In-Mould-Labels angeformt sein, die zum Innenraum des Behälters frei liegt und die mit einer weiteren Kante des In-Mould-Labels in dem Überlappungsbereich überlappt und diese weitere Kante in dem Überlappungsbereich überdeckt. Durch die Abziehhilfe kann das Lösen der festen Verbindung der beiden Kanten des In-Mould-Labels in dem Überlappungsbereich vereinfacht werden.

Bei einer Weiterbildung dieser Ausführungsform weist das wandseitige In-Mould-Label in dem von der Abziehhilfe überdeckten Teilbereich eine Perforation auf, die bevorzugt benachbart zu dem Überlappungsbereich verläuft. Um das Abziehen des wandseitigen In-Mould-Labels zu vereinfachen, kann das wandseitige In-Mould-Label eine Perforation aufweisen, die in der Regel im Wesentlichen entlang der Hochachse des Behälters verläuft. Die Perforation ist in dem von der Abziehhilfe überdeckten Teilbereich des In-Mould-Labels gebildet und wird daher von der Abziehhilfe vor dem direkten Kontakt mit dem Füllgut geschützt. Die Perforation ermöglicht ein erstes lokales Einreißen des In-Mould-Labels und erleichtert das Ablösen des In-Mould-Labels von der Innenseite der Seitenwand des Behälters insbesondere für den Fall, dass die feste Verbindung, insbesondere die Verschweißung, des In-Mould-Labels in dem Überlappungsbereich sich nicht ohne weiteres lösen lässt.

Für den Fall, dass das bodenseitige In-Mould-Label lösbar mit der Innenseite des Bodens verbunden ist, kann das jeweilige bodenseitige In-Mould-Label alternativ oder zusätzlich ebenfalls eine Abziehhilfe aufweisen.

Bevorzugt ist eine Innenseite des wandseitigen In-Mould-Labels zumindest in dem Teilbereich, insbesondere als Ganzes, und/oder eine Innenseite des bodenseitigen In-Mould-Labels ist zumindest in dem Teilbereich, insbesondere als Ganzes, zur Herstellung der lösbaren Verbindung beschichtet, lackiert, bedruckt und/oder oberflächenbehandelt. Bei dieser Ausführungsform kann das In-Mould-Label selbst aus einem mit dem Kunststoff-Material des Behälters kompatiblen Kunststoff-Material hergestellt sein. Die Innenseite, genauer gesagt die Oberfläche an der Innenseite eines jeweiligen In-Mould-Labels, kann eine Beschichtung, einen Lack, einen Aufdruck, etc. aus einem Material aufweisen, das mit dem Kunststoff-Material des Behälters keinen Schmelze-Verbund bildet. Die Verhinderung einer dauerhaften Verbindung mit dem Kunststoff-Material des Behälters kann auch durch eine geeignete Oberflächenbehandlung der Innenseite des jeweiligen In-Mould-Labels erreicht werden.

Bei einer weiteren Ausführungsform weist/weisen eine Außenseite des wandseitigen In-Mould-Labels und/oder eine Außenseite des bodenseitigen In-Mould-Labels Oberflächenstrukturen und/oder eine Beschichtung zur Reduzierung der Anhaftung eines Füllguts auf. Die Beschichtung bzw. die Oberflächenstrukturen können beispielsweise hydrophob ausgebildet sein, um die Anhaftung eines Wasser enthaltenden Füllguts zu vermeiden. Die Beschichtung bzw. die Oberflächenstrukturen können z.B. oleophob ausgebildet sein, um die Anhaftung eines Öl enthaltenden Füllguts zu vermeiden. Zusätzlich oder alternativ zu einer Beschichtung können an der Außenseite eines jeweiligen In-Mould-Labels auch Oberflächenstrukturen gebildet sein, die eine Anhaftung des Füllguts reduzieren. Die Oberflächenstrukturen können beispielsweise in Form eines Granulats bzw. von Körnchen ausgebildet sein, die einen Wasser-abweisenden Effekt aufweisen, wie dies beispielsweise in der WO 00/42591 A1 beschrieben ist. Auf diese Weise können Anhaftungen an der Innenseite des Bodens bzw. der Seitenwand des Behälters reduziert und die Rest-Entleerbarkeit des Behälters kann verbessert werden.

Es versteht sich, dass auch Beschichtungen bzw. Oberflächenstrukturen an der Außenseite der In-Mould-Label angebracht werden können, die andere Funktionen als die Reduzierung der Anhaftung des Füllguts erfüllen. An der Außenseite der jeweiligen In-Mould-Label können z.B. Oberflächenstrukturen und/oder eine Beschichtung aufgebracht werden, die das Kunststoff-Material des In-Mould-Labels vor Degradation durch das Füllgut schützen.

Bei einer weiteren Ausführungsform ist/sind das bodenseitige In-Mould-Label und/oder das wandseitige In-Mould-Label aus einem lebensmittelkonformen Material hergestellt, wobei der Behälter bevorzugt zumindest teilweise aus einem Regenerat-Material gebildet ist. Diese Ausführungsform ist insbesondere günstig, wenn sich das wandseitige In-Mould-Label bis zu dem umlaufenden Rand, genauer gesagt bis zu dem Kontaktbereich mit dem Deckel, erstreckt und auch das bodenseitige In-Mould-Label den Boden vollständig überdeckt. Weist in diesem Fall auch der Deckel ein innenseitiges In-Mould-Label oder Label aus einem lebensmittelkonformen Material oder ggf. eine Beschichtung oder dergleichen aus einem lebensmittelkonformen Material auf oder ist der Deckel selbst aus einem lebensmittelkonformen Material gebildet, kann das entsprechende Gebinde als Ganzes Lebensmittelkonformität aufweisen, auch wenn das Kunststoff-Material des Behälters selbst nicht lebensmittelkonform ist, beispielsweise weil das Kunststoff-Material des Behälters ganz oder teilweise aus einem nicht lebensmittelkonformen Regenerat-Kunststoff gebildet ist. Lebensmittelkonforme Materialien erfüllen die geltenden rechtlichen Anforderungen (aktuell definiert die Verordnung (EG) 1935/2004 die grundlegenden Anforderungen), um mit Lebensmitteln in Kontakt zu kommen. Der Behälter kann vollständig oder nur teilweise aus einem Regenerat-Material gebildet sein. In letzterem Fall kann der Behälter insbesondere in Sandwich-Bauweise in Form eines Kern aus Regenerat-Material gebildet sein, der von einer Hülle aus herkömmlichem, nicht rezykliertem bzw. nicht regeneriertem Kunststoff umgeben ist.

Bei einer weiteren Ausführungsform weist/weisen das wandseitige In-Mould-Label, das bodenseitige In-Mould-Label und/oder das außenseitige In-Mould-Label oder das außenseitige Label eine oder mehrere Folien-Schichten, ein Vlies oder einen Papier-Kunststoffverbund auf, bilden ein Laminat, insbesondere ein Papier-Kunststofflaminat, und/oder sind bedruckt. Ein jeweiliges In-Mould-Label oder Label kann aus einer einzelnen Folie bzw. Folien-Schicht, aus mehreren Folien-Schichten oder aus Laminaten bestehen, bei denen mehrere Folien-Schichten miteinander verklebt sind. Das In-Mould-Label oder das Label kann auch ein Vlies bzw. eine Schicht aus einem Vliesstoff aufweisen. Das Label kann abhängig vom Einsatzzweck auch als Papier-Kunststofflaminat aufgebaut sein bzw. einen Papier-Kunststoffverbund aufweisen. Der Aufbau der In-Mould-Labels oder des Labels richtet sich nach dem jeweiligen Anforderungsprofil des Kunststoff-Behälters in Abhängigkeit vom gewünschten Füllgut und kann individuell angepasst werden. Beispielsweise können durch die Wahl geeigneter Folien-Materialien die Barriere-Eigenschaften des Behälters gegen Sauerstoff, Wasserdampf oder auch die Beständigkeit des Behälters gegenüber aggressiven Füllgütern erhöht werden. Zur Abschirmung des Regenerat-Materials des Behälters bzw. zur Bildung eines lebensmittelkonformen In-Mould-Labels oder Labels kann beispielsweise ein Laminat mit einer Al-Barriere als Sperrschicht eingesetzt werden. Ein Vlies weist eine vergleichsweise große Oberfläche auf und hat sich u.a. als günstig erwiesen, wenn das In-Mould-Label oder das Label zur Reduzierung der Anhaftung eines Füllguts dienen soll und zu diesem Zweck hydrophobe oder oleophobe Eigenschaften aufweisen soll.

Bei einer weiteren Ausführungsform weist der Behälter an einer Außenseite der umlaufenden Seitenwand und/oder an einer Außenseite des Bodens mindestens ein außenseitiges In-Mould-Label oder ein außenseitiges Label auf. Die Anbringung von außenseitigen In-Mould-Labeln oder Labeln an Behältern ist grundsätzlich bekannt. Ein an der Außenseite der Seitenwand angebrachtes In-Mould-Label oder Label kann sich beispielsweise in Umfangsrichtung über die gesamte Seitenwand erstrecken, so dass gegenüberliegende Kanten des In-Mould-Labels in einem geringen Abstand voneinander angeordnet sind. In diesem Fall kann es zur Reduzierung der Kerbwirkung günstig sein, wenn die gegenüberliegenden Kanten des außenseitigen In-Mould-Labels eine Wellenform aufweisen, wie dies beispielsweise in der DE102017107675 A1 beschrieben ist. Die beiden in der Regel überlappenden Kanten des wandseitigen In-Mould-Labels an der Innenseite der Seitenwand können in Umfangsrichtung in Bezug auf die gegenüberliegenden Kanten des außenseitigen (In-Mould-)Labels individuell, d.h. an derselben oder an unterschiedlichen Positionen in Umfangsrichtung angeordnet werden, um eine mögliche Kerbwirkung durch benachbart angeordnete Kanten des innenseitigen und des außenseitigen wandseitigen (In-Mould-)Labels zu vermeiden und/oder um die Barriere-Wirkung zu verbessern. Auch das außenseitige wandseitige (In-Mould-)Label kann zwei überlappende Kanten aufweisen, um die Barriere-Wirkung zu verbessern.

Bei einer Weiterbildung ist an der Außenseite des Bodens des Behälters ein bodenseitiges In-Mould-Label oder ein bodenseitiges Label angebracht, wobei das bodenseitige In-Mould-Label oder das bodenseitige Label einen sich entlang der Außenseite der Seitenwand erstreckenden Abschnitt aufweist, der mit einem außenseitigen wandseitigen In-Mould-Label überlappt und der mit dem wandseitigen In-Mould-Label fest verbunden, insbesondere verschweißt ist. Durch das außenseitige bodenseitige (In-Mould-)Label, das mit dem außenseitigen wandseitigen In-Mould-Label überlappt, kann die Barriere-Wirkung verstärkt werden. Dies ist insbesondere sinnvoll, wenn der Behälter selbst ganz oder teilweise, z.B. in seinem Kern, aus einem Regenerat-Material gebildet ist.

Die jeweiligen (In-Mould-)Label können auch bedruckt werden, um als Werbefläche, Funktionsfläche (s.o.) oder als Informationsfläche zu dienen. Die Bedruckung eines jeweiligen (In-Mould-)Labels kann grundsätzlich an der Außenseite und/oder an der Innenseite erfolgen. Durch die Abdeckung der gesamten Innenfläche des Behälters (Seitenwand und Boden) mit (In-Mould-)Labeln lassen sich licht- und blickdichte Behälter realisieren, auch wenn das Material des Behälters transparent oder teilweise transparent ist.

Bei einer Weiterbildung dieser Ausführungsform ist/sind das das wandseitige In-Mould-Label und/oder das bodenseitige In-Mould-Label aus einem bevorzugt transparenten Material gebildet und an ihrer Innenseite und/oder an ihrer Außenseite bedruckt. Um einen direkten Kontakt des Aufdrucks mit dem Füllgut zu vermeiden, hat es sich als günstig erwiesen, wenn das jeweilige In-Mould-Label an seiner der Innenseite des Behälters zugewandten Innenseite (reverse) bedruckt wird. Durch die Verwendung eines transparenten Materials kann auch in diesem Fall der Aufdruck vom Anwender wahrgenommen werden und das In-Mould-Label kann seine Funktion als Werbefläche bzw. als Informations-Fläche erfüllen. Es ist aber grundsätzlich auch möglich, das jeweilige (transparente oder nicht transparente) In-Mould-Label an seiner Außenseite zu bedrucken.

Ein weiterer Aspekt der Erfindung betrifft ein Gebinde, umfassend: einen Behälter, der wie weiter oben beschrieben ausgebildet ist, sowie einen Deckel, der ein Klemmprofil zum Zusammenwirken mit dem Klemmprofil an dem Eingriffsbereich an dem umlaufenden Rand des Behälters umfasst, um die Öffnung an dem Behälter zu verschließen.

Bevorzugt weist der Deckel an seiner Innenseite mindestens ein deckelseitiges In-Mould-Label und/oder mindestens ein zumindest in einem Teilbereich mit dem Deckel verbundenes Label auf, welches die Innenseite des Deckels zumindest bis zu dem Kontaktbereich überdeckt. Es versteht sich, dass das Gebinde alternativ einen Deckel aufweisen kann, an dessen Innenseite (und ggf. an dessen Außenseite) kein deckelseitiges In-Mould-Label bzw. Label angebracht ist oder der Behälter mit einer Siegelfolie verschlossen wird, bevor der Deckel (ohne Label) aufgebracht wird.

Der Behälter, dessen Klemmprofil mit dem Klemmprofil des Deckels zusammenwirkt, ist wie weiter oben beschrieben ausgebildet.

Durch das an der Innenseite des Deckels angebrachte In-Mould-Label oder das nachträglich angebrachte Label, das sich bis in den Kontaktbereich am Rand des Behälters erstreckt, kann die Innenseite eines Gebindes vollflächig mit Labeln abgedeckt werden, so dass eine optimale Barriere-Wirkung erzeugt werden kann. Es versteht sich, dass zusätzlich an einer Außenseite des Deckels ein weiteres deckelseitiges In-Mould-Label oder ein Label angebracht sein kann. Das nach dem Spritzguss-Prozess des Deckels an der Innenseite des Deckels aufgebrachte Label ist mit dem Deckel z.B. durch Schweißen (fest) verbunden. Das nachträgliche Anbringen eines Labels an der Innenseite des Deckels kann sinnvoll sein, wenn die Eigenschaften des Labels, z.B. (Barriere- oder Oberflächeneigenschaften) durch das Umspritzen beeinträchtigt oder zerstört würden. Das Label kann nur in einem Teilbereich mit der Innenseite des Deckels verschweißt werden, es ist aber auch möglich, dass das Label vollflächig mit der Innenseite des Deckels verbunden ist.

Bei einer Ausführungsform ist das deckelseitige In-Mould-Label und/oder das deckelseitige Label zumindest in einem Teilbereich, insbesondere als Ganzes - mit geringem Kraftaufwand - lösbar mit der Innenseite des Deckels verbunden, wobei bevorzugt eine Innenseite des deckelseitigen In-Mould-Labels und/oder des deckelseitigen Labels zumindest in dem Teilbereich zur Herstellung der lösbaren Verbindung beschichtet, lackiert, bedruckt und/oder oberflächenbehandelt ist. Für das deckelseitige In-Mould-Label bzw. das deckelseitige Label gilt ebenso wie für die weiter oben beschriebenen In-Mould-Label, die an der Innenseite des Behälters angebracht sind, dass es günstig sein kann, wenn dieses partiell, d.h. in einem oder mehreren Teilbereichen, oder ggf. als Ganzes lösbar mit der Innenseite des Deckels verbunden ist.

Bei einer Weiterbildung ist an das deckelseitige In-Mould-Label und/oder an das deckelseitige Label eine Abziehhilfe, bevorzugt eine Abziehlasche, angeformt, die bevorzugt in Richtung einer Hochachse des Behälters ausgerichtet ist und/oder die bevorzugt nicht in das Klemmprofil des Deckels hineinragt.

Auch das deckelseitige In-Mould-Label bzw. das deckelseitige Label kann mindestens eine Abziehhilfe, beispielsweise in Form einer Abziehlasche, aufweisen, die an das deckelseitige (In-Mould-)Label angeformt ist. Die Abziehhilfe, z.B. in Form der Abziehlasche, kann insbesondere in einem Abschnitt des (In-Mould-)Labels gebildet sein, der seitlich über einen plane Fläche übersteht, die an der Innenseite des Deckels gebildet ist. Der seitlich überstehende Abschnitt des (In-Mould-)Labels kann - auch für den Fall, dass keine Abziehlasche vorhanden ist - beim Aufsetzen des Deckels nach oben in den Randbereich des Deckels umgebogen werden, um in dem Kontaktbereich mit dem wandseitigen In-Mould-Label in Anlage gebracht zu werden. Die Abziehlasche sollte hierbei aber nicht in das Klemmprofil des Deckels hineinragen.

Bei einer weiteren Ausführungsform ist das deckelseitige In-Mould-Label und/oder das deckelseitige Label aus einem lebensmittelkonformen Material gebildet, wobei der Deckel bevorzugt zumindest teilweise aus einem Regenerat-Material gebildet ist. In Kombination mit dem weiter oben beschriebenen Behälter, bei dem die In-Mould-Label ebenfalls aus einem lebensmittelkonformen Material gebildet sind, kann in diesem Fall ein lebensmittelkonformes Gebinde bereitgestellt werden, ohne dass das bzw. die Kunststoff-Materialien des Behälters bzw. des Deckels selbst aus lebensmittelkonformem Material hergestellt sind. Wie bei dem Behälter kann auch der Deckel einen Innenkern aus einem Regenerat-Material aufweisen, der von nicht regeneriertem Kunststoff-Material umgeben ist.

Bei einer weiteren Ausführungsform weist eine Außenseite des deckelseitigen In-Mould-Labels und/oder des deckelseitigen Labels Oberflächenstrukturen und/oder eine Beschichtung zur Reduzierung der Anhaftung eines Füllguts auf. Insbesondere beim Transport des Gebindes kann Füllgut auch an die Innenseite des Deckels gelangen. Daher ist es günstig, wenn das deckelseitige In-Mould-Label bzw. das deckelseitige Label eine funktionelle Beschichtung und/oder Oberflächenstrukturen aufweist, die der Anhaftung des Füllguts entgegenwirken. Unter einer Reduzierung der Anhaftung des Füllguts wird verstanden, dass die Anhaftung des Füllguts an der Innenseite des Kunststoff-Materials des Deckels (bzw. des Behälters, s.o.) ohne In-Mould-Label bzw. Label größer ist als für den Fall, dass der Deckel an seiner Innenseite mit dem In-Mould-Label bzw. mit dem Label versehen ist.

Bei einer weiteren Ausführungsform weist das deckelseitige In-Mould-Label und/oder das deckelseitige Label eine oder mehrere Folien-Schichten, ein Vlies oder einen Papier-Kunststoffverbund auf, bildet ein Laminat, insbesondere ein Papier-Kunststofflaminat, und/oder ist bedruckt. Hinsichtlich des Aufbaus des deckelseitigen In-Mould-Labels bzw. Labels gelten die obigen Ausführungen zu den behälterseitigen In-Mould-Labeln entsprechend. Auch die Bedruckung des In-Mould-Labels bzw. des Labels kann grundsätzlich an der Innenseite und/oder an der Außenseite erfolgen. Für den Fall, dass eine Bedruckung an der Innenseite erfolgen soll, um einen direkten Kontakt des Aufdrucks mit dem Füllgut zu vermeiden, ist das deckelseitige In-Mould-Label bzw. das Label typischerweise aus einem transparenten Material gebildet.

Bei einer weiteren Ausführungsform bildet der Deckel an seiner Innenseite zumindest in einem von dem deckelseitigen In-Mould-Label und/oder von dem deckelseitigen Label überdeckten Teilbereich eine zumindest abschnittsweise plane Fläche. Vorzugsweise hat der Deckel auf seiner Innenseite eine ebene Fläche ohne scharfkantige Absätze / Erhebungen oder Vertiefungen, um ggf. vorhandene Barriereschichten bzw. Folien beim Umspritzen nicht zu beschädigen (auftretende Drücke können die Folie in die Störgeometrien an der Innenseite des Deckels eindrücken und Barriereschichten zerstören). Auch bei einem an der Innenseite des Deckels angebrachten Label ist es günstig, wenn die Innenseite des Deckels möglichst keine Absätze bzw. Erhebungen aufweist. Unter einer zumindest abschnittsweise planen Fläche wird verstanden, dass der Deckel ggf. zwischen zwei planen Abschnitten einen Knick mit einem vergleichsweise großen Krümmungsradius aufweisen kann, an dem der Deckel beispielsweise von einem planen Innenbereich (Deckelspiegel) in einen nach oben über den Innenbereich überstehenden, radial außen liegenden Randbereich übergehen kann.

Sowohl der weiter oben beschriebene Behälter als auch der Deckel des Gebindes sind aus einem Kunststoff-Material gebildet, bei dem es sich beispielsweise um Polyethylen, Polypropylen, Polyamide oder Polyolefine handeln kann. Behälter und/oder Deckel aus Polyolefinen, insbesondere aus Polyethylen oder aus Polypropylen, sind typischerweise kostengünstig herstellbar. Ferner weisen derartige Behälter bzw. Deckel vorteilhafte Eigenschaften auf, wie z.B. eine große Beständigkeit durch hohe Zähigkeits- und Reißdehnungswerte. Grundsätzlich kann der Behälter bzw. der Deckel aber auch aus anderen Kunststoff-Materialien (insbesondere aus Thermoplasten, ggf. auch aus Duroplasten) hergestellt sein.

Ein weiterer Aspekt der Erfindung betrifft ein Verfahren zum Herstellen eines erfindungsgemäßen Behälters, umfassend: Anbringen des wandseitigen In-Mould-Labels an einer Mantelfläche eines Formkerns, Anbringen des bodenseitigen In-Mould-Labels an einer Stirnseite des Formkerns, wobei das bodenseitige In-Mould-Label einen (rand- bzw. umfangsseitigen) Abschnitt aufweist, der seitlich über die Stirnseite des Formkerns übersteht, Bewegen des mit dem wandseitigen In-Mould-Label und dem bodenseitigen In-Mould-Label versehenen Formkerns in eine Matrize eines Formwerkzeugs zur Bildung eines Form-Hohlraums, sowie Einspritzen von Kunststoff in den Form-Hohlraum ausgehend von mindestens einer Einspritz-Position, die der Stirnseite des Formkerns gegenüberliegt, um den überstehenden Abschnitt des bodenseitigen In-Mould-Labels mit seiner Außenseite in Überlappung mit der Innenseite des wandseitigen In-Mould-Labels zu bringen.

Die Außenseite des bodenseitigen In-Mould-Labels bezeichnet hierbei diejenige Seite des bodenseitigen In-Mould-Labels, die nach dem Herstellen des Behälters der Innenseite des Behälters abgewandt ist. Die Innenseite des wandseitigen In-Mould-Labels bezeichnet diejenige Seite, die der Innenseite des Behälters zugewandt ist. Wie weiter oben in Zusammenhang beschrieben wurde, kann durch das Umklappen des überstehenden Abschnitts des bodenseitigen In-Mould-Labels beim Einspritzen des Kunststoff-Materials in den Form-Hohlraum ein Hinterspritzen des wandseitigen In-Mould-Labels vermieden werden, so dass die In-Mould-Label bzw. der Behälter konturgetreu hergestellt werden können. Alternativ können das wandseitige In-Mould-Label und der überstehende Abschnitt des bodenseitigen In-Mould-Labels bereits vor dem Anbringen der In-Mould-Label an dem Formkern miteinander verbunden werden, wie weiter unten näher beschrieben wird.

Bei einer Weiterbildung erfolgt das Anbringen des wandseitigen In-Mould-Labels an dem Formkern und bevorzugt das Anbringen des bodenseitigen In-Mould-Labels an dem Formkern mittels einer Übergabeeinrichtung, die einen schalenförmigen Grundkörper aufweist, an dessen Innenseite eine insbesondere konische Mantelfläche gebildet ist, an der das wandseitige In-Mould-Label angebracht ist, und an dessen Stirnseite bevorzugt das bodenseitige In-Mould-Label angebracht ist.

Für die Übergabe des wandseitigen In-Mould-Labels an die typischerweise konische oder zylindrische Mantelfläche des Formkerns hat sich eine Übergabeeinrichtung als günstig erwiesen, an deren Innenseite das wandseitige In-Mould-Label angebracht wird. Eine solche Übergabeeinrichtung, mit deren Hilfe zusätzlich auch das bodenseitige In-Mould-Label an der Stirnseite des Formkerns angebracht wird, hat sich als günstig erwiesen, da mittels einer solchen Übergabeeinrichtung das wandseitige In-Mould-Label und das bodenseitige In-Mould-Label zeitparallel an dem Formkern angebracht werden können. Das bodenseitige In-Mould-Label kann in einem Hohlraum an der Stirnseite des schalenförmigen Grundkörpers gelagert werden und mittels einer an dem schalenförmigen Grundkörper angebrachten Bewegungseinrichtung an der Stirnseite des Formkerns angebracht bzw. appliziert werden. Sowohl an der Übergabeeinrichtung als auch an dem Formkern können die In-Mould-Label z.B. durch die Erzeugung eines Unterdrucks (Vakuum), durch statische Aufladung, etc. gehalten werden.

Grundsätzlich ist es auch möglich, mittels der Übergabeeinrichtung, welche den schalenförmigen Grundkörper aufweist, nur das wandseitige In-Mould-Label an den Formkern zu übergeben und das bodenseitige In-Mould-Label mit Hilfe einer weiteren Übergabeeinrichtung an den Formkern zu übergeben. Gegebenenfalls kann das wandseitige In-Mould-Label unmittelbar auf den Formkern aufgebracht (gewickelt) werden.

Bei einer Weiterbildung wird das wandseitige In-Mould-Label an einer bevorzugt konusförmigen Mantelfläche eines Kerns angebracht, wobei bevorzugt zwei in Umfangsrichtung gegenüber liegende Kanten des wandseitigen, an dem Kern angebrachten In-Mould-Labels in einem Überlappungsbereich fest miteinander verbunden, insbesondere verschweißt, werden, und wobei das wandseitige In-Mould-Label von der Mantelfläche des Kerns an die Mantelfläche an der Innenseite des schalenförmigen Grundkörpers der Übergabeeinrichtung übergeben wird. Es hat sich als günstig erwiesen, wenn die Kanten des In-Mould-Labels vor der Übergabe an die Übergabeeinrichtung in dem Überlappungsbereich miteinander verschweißt werden, da dies die Übergabe vereinfacht. Das Verschweißen des wandseitigen In-Mould-Labels vor dem Einspritzen des Kunststoff-Materials in den Form-Hohlraum vereinfacht auch die Anbringung bzw. die Fixierung des wandseitigen In-Mould-Labels an der Mantelfläche des Formkerns. Durch das feste Verbinden bzw. das Verschweißen kann ein Hinterspritzen des wandseitigen In-Mould-Labels an dessen überlappenden Kanten verhindert werden.

Bei einer Variante umfasst das Verfahren: Festes Verbinden, insbesondere Verschweißen, des überlappenden Abschnitts des bodenseitigen In-Mould-Labels mit dem wandseitigen In-Mould-Label nach dem Einspritzen des Kunststoffs in den Form-Hohlraum, bevorzugt unter Verwendung mindestens eines beheizbaren Kontaktelements, das mit der Außenseite des wandseitigen In-Mould-Labels in Kontakt gebracht wird. Wie weiter oben beschrieben wurde, ist es für die Barriere-Wirkung günstig, wenn das wandseitige In-Mould-Label mit dem bodenseitigen In-Mould-Label in dem überlappenden Abschnitt fest verbunden wird. Die feste Verbindung kann insbesondere durch Schweißen hergestellt werden. Für das Verschweißen kann der Behälter beispielsweise mit Hilfe eines Staplers oder dergleichen in einer Aufnahme abgesetzt werden, die an einer Schweißstation gebildet ist. Als Kontaktelement kann beispielsweise ein Schweißring dienen, der von oben in den Behälter eingeführt wird, der sich über den gesamten Boden des Behälters erstreckt und dessen Außenumfang mit der Außenseite des überlappenden Abschnitts des wandseitigen In-Mould-Labels in Kontakt gebracht wird, um die zum Verschweißen erforderliche Kontaktwärme zuzuführen. An Stelle eines ringförmigen Kontaktelements können auch eines oder mehrere Kontaktelemente verwendet werden, die nur an einer bzw. an einzelnen Stellen in Umfangsrichtung an der Außenseite des wandseitigen In-Mould-Labels in Kontakt gebracht werden. In diesem Fall kann die Aufnahme beispielsweise ausgebildet sein, den Behälter um eine vertikale Achse zu drehen, die der Mittelachse des Behälters entspricht.

Bei einer weiteren Variante umfasst das Verfahren: Einlegen mindestens eines außenseitigen, bevorzugt wandseitigen In-Mould-Labels in die Matrize des Formwerkzeugs vor dem Einspritzen des Kunststoffs in den Form-Hohlraum. Bei dem außenseitigen In-Mould-Label kann es sich um ein In-Mould-Label handeln, welches an der Außenseite der Seitenwand oder an der Außenseite des Bodens angebracht wird. Für das Einlegen des außenseitigen In-Mould-Labels kann die Vorrichtung eine geeignete Einlegeeinrichtung aufweisen. Die Einlegeeinrichtung kann einen (weiteren) Kern umfassen, wie dies beispielsweise in der US 5,053,101 beschrieben ist.

Eine Weiterbildung dieser Variante umfasst: Einlegen eines außenseitigen bodenseitigen In-Mould-Labels, welches mit dem außenseitigen wandseitigen In-Mould-Label in einem überlappenden Abschnitt fest verbunden, insbesondere verschweißt ist, in die Matrize des Formwerkzeugs vor dem Einspritzen des Kunststoffs den Form-Hohlraum. Bei dieser Variante werden die beiden außenseitigen In-Mould-Label gemeinsam in den Form-Hohlraum eingelegt und verbinden sich beim Einspritzen des Kunststoffs typischerweise mit der Außenseite der Seitenwand bzw. mit der Außenseite des Bodens des Behälters. Da das Einspritzen von Kunststoff in den Form-Hohlraum in der Regel von einer Einspritz-Position an der Matrize erfolgt, die sich im Zentrum des Bodens befindet, ist es typischerweise erforderlich, eine Öffnung für den Durchtritt des Kunststoffs in dem außenseitigen bodenseitigen In-Mould-Label vorzusehen. Die Öffnung kann nach dem Abschluss des Spritzguss-Prozesses ggf. durch die Anbringung eines weiteren Labels verschlossen werden.

Eine alternative Weiterbildung dieser Variante umfasst: Festes Verbinden, insbesondere Verschweißen, eines überstehenden Abschnitts eines bodenseitigen Labels mit dem außenseitigen wandseitigen In-Mould-Label nach dem Einspritzen des Kunststoffs in den Form-Hohlraum. In diesem Fall wird nach der Herstellung des Behälters, d.h. nach dem Abschluss des Spritzgieß-Prozesses, das bodenseitige Label fest mit dem Boden des Behälters sowie mit dem außenseitigen wandseitigen In-Mould-Label verbunden. Für die Verbindung des bodenseitigen Labels mit dem außenseitigen wandseitigen In-Mould-Label kann beispielsweise eine Verbindungseinrichtung in Form einer Schweißeinrichtung verwendet werden, die eines oder mehrere beheizbare Kontaktelemente aufweist, um das Label in dem überlappenden Abschnitt mit der Außenseite des außenseitigen wandseitigen In-Mould-Labels zu verschweißen. Die Verbindungseinrichtung kann auch dazu genutzt werden, das Label mit der Außenseite des Bodens des Behälters zu verbinden.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in den Zeichnungen dargestellt und wird anhand von Ausführungsbeispielen näher erläutert. Es zeigen die:
- **Fig. 1a**: eine perspektivische Darstellung eines Behälters aus Kunststoff, der an seiner Innenseite ein bodenseitiges und ein wandseitiges In-Mould-Label sowie ein wandseitiges In-Mould-Label an seiner Außenseite umfasst,
- **Fig. 1b**: eine Schnittdarstellung des Behälters von Fig. 1a mit einem Überlappungsbereich zweier Kanten des wandseitigen In-Mould-Labels, das an der Innenseite des Behälters angebracht ist, und eine Darstellung einer benachbart zu dem Überlappungsbereich gebildeten Abziehlasche,
- **Fig. 1c**: eine Darstellung analog zu Fig. 1b, bei der zwei Kanten eines außenseitigen wandseitigen In-Mould-Labels miteinander überlappen,
- **Fig. 2a,b**: eine Darstellung eines Details des oberen Randes des Behälters von Fig. 1a bzw. eines Deckels,
- **Fig. 3a,b**: Darstellungen eines Details des Übergangs zwischen einer Seitenwand und einem Boden des Behälters von Fig. 1a,
- **Fig. 3c,d**: Darstellungen analog zu Fig. 3a,b mit einem außenseitigen wandseitigen In-Mould-Label, das mit einem überstehenden Abschnitt eines bodenseitigen In-Mould-Labels überlappt,
- **Fig. 4a-c**: drei Darstellungen eines Form-Hohlraums, in den zur Bildung des Behälters von Fig. 1a ein Kunststoff-Material eingespritzt wird,
- **Fig. 5a-d**: Darstellungen eines Form-Hohlraums, in den zur Bildung eines nicht erfindungsgemäßen Behälters, der an seiner Innenseite nur ein wandseitiges In-Mould-Label aufweist, ein Kunststoff-Material eingespritzt wird, sowie einer Verbindungsvorrichtung zum Verbinden eines bodenseitigen Labels mit dem wandseitigen In-Mould-Label,
- **Fig. 6**: eine Darstellung einer Vorrichtung zur Herstellung eines Behälters, die eine Einlegeeinrichtung zum Einlegen eines wandseitigen In-Mould-Labels in eine Matrize eines Formwerkzeugs aufweist,
- **Fig. 7**: eine Darstellung einer Vorrichtung zur Herstellung eines Behälters gemäß Fig. 1a, welche eine Übergabeeinrichtung zum Übergeben eines mantelseitigen In-Mould-Labels sowie eines stirnseitigen In-Mould-Labels an einen Formkern des Formwerkzeugs aufweist,
- **Fig. 8a-c**: Darstellungen der Übergabeeinrichtung von Fig. 7 sowie einer Bereitstellungseinrichtung zur Bereitstellung des wandseitigen In-Mould-Labels und einer weiteren Bereitstellungseinrichtung zur Bereitstellung des bodenseitigen In-Mould-Labels,
- **Fig. 9a-d**: Darstellungen der Übergabe des bodenseitigen und des mantelseitigen In-Mould-Labels an den Formkern sowie der Bewegung des Formkerns in die Matrize zur Bildung des Formhohlraums,
- **Fig. 10a,b**: Darstellungen einer Verbindungseinrichtung zum Verschweißen eines überlappenden Abschnitts des bodenseitigen In-Mould-Labels mit dem wandseitigen In-Mould-Label,
- **Fig. 11a-c**: Darstellungen einer Übergabeeinrichtung analog zu Fig. 7 sowie einer nicht erfindungsgemäßen Verbindungseinrichtung zum Verschweißen des wandseitigen und des bodenseitigen In-Mould-Labels vor der Übergabe an die Übergabeeinrichtung, sowie
- **Fig. 12a,b**: Darstellungen einer Übergabeeinrichtung zur Übergabe des Behälters von dem Formkern an einen konischen Kern der Bereitstellungseinrichtung sowie einer weiteren Verbindungseinrichtung zum Verschweißen eines wandseitigen und eines bodenseitigen Labels nach dem Abschluss des Spritzgieß-Prozesses bei einer nicht erfindungsgemäßen Applikations-Vorrichtung.

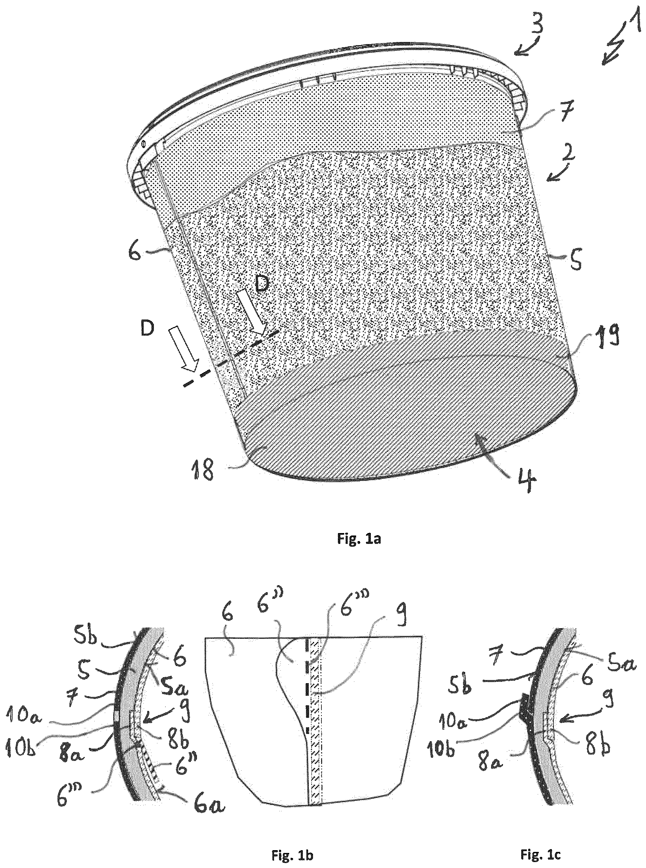

Das in **Fig. 1a** gezeigte Gebinde **1** umfasst einen Behälter **2** (Eimer) und einen Deckel **3.** Der Behälter 2 weist einen Boden **4** und eine umlaufende Seitenwand **5** auf, die leicht konisch verläuft. Wie in **Fig. 1a** und insbesondere in **Fig. 1b** zu erkennen ist, ist an einer Innenseite **5a** der Seitenwand **5** ein wandseitiges In-Mould-Label **6** angebracht. An einer Außenseite **5b** der umlaufenden Seitenwand 5 ist ein weiteres wandseitiges In-Mould-Label **7** angebracht. Wie in Fig. 1b ebenfalls zu erkennen ist, überlappen zwei in Umfangsrichtung gegenüberliegende, in Richtung einer Hochachse des Behälters 2 verlaufende Kanten **8a, 8b** des an der Innenseite 5a der Seitenwand 5 angebrachten wandseitigen In-Mould-Labels 6 in einem gemeinsamen Überlappungsbereich **9** miteinander. Die beiden Kanten 8a, 8b sind in dem Überlappungsbereich 9 durch eine Schweiß-Verbindung fest miteinander verbunden.

Wie in Fig. 1b zu erkennen ist, sind in Umfangsrichtung gegenüberliegende Kanten **10a, 10b** des an der Außenseite 5b der Seitenwand 5 angebrachten In-Mould-Labels, die sich ebenfalls im Wesentlichen in Richtung der Hochachse des Behälters 2 erstrecken, geringfügig voneinander beabstandet. Alternativ ist es auch möglich, dass die beiden in Umfangsrichtung gegenüberliegenden Kanten 10a, 10b des an der Außenseite 5b der Seitenwand 5 angebrachten In-Mould-Labels 7 überlappen und fest miteinander verbunden, insbesondere verschweißt sind, wie dies in **Fig. 1c** dargestellt ist.

Die Position in Umfangsrichtung, an der die beiden Kanten 10a, 10b des an der Außenseite der Seitenwand 5 angebrachten In-Mould-Labels 7 gebildet sind und die Position in Umfangsrichtung des Überlappungsbereichs 9 des an der Innenseite 4b der Seitenwand angebrachten In-Mould-Labels 6 können einander entsprechen, wie dies in Fig. 1b dargestellt ist. In der Regel ist es jedoch günstiger, wenn die Position des Überlappungsbereichs 9 und die Position der beiden Kanten 10a, 10b des an der Außenseite der Seitenwand 5 angebrachten In-Mould-Labels 7 in Umfangsrichtung voneinander beabstandet sind, beispielsweise um einen Winkel von 180°, so dass diese an diametral gegenüberliegenden Positionen in Umfangsrichtung des Behälters 2 angeordnet sind.

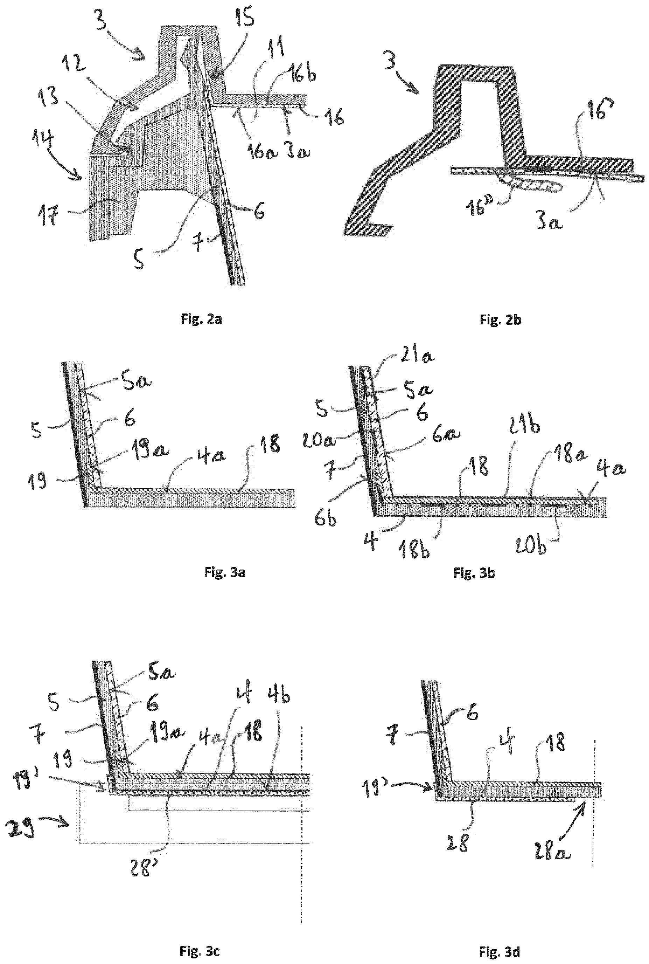

**Fig. 2a** zeigt ein Detail des Gebindes 1 von Fig. 1a mit einem oberen Abschnitt der Seitenwand 5, an der im Bereich einer runden Öffnung **11** des Behälters 2 ein umlaufender Rand **12** mit einem Eingriffsbereich **13** zum rastenden Zusammenwirken mit dem Deckel 3 gebildet ist. An den umlaufenden Rand 12 schließt sich eine Schürze **14** zur Stabilisierung des umlaufenden Rands 12 an. Der Eingriffsbereich 13 weist im gezeigten Beispiel ein Klemmprofil auf, welches mit einem Klemmprofil des Deckels 3 zusammenwirkt, um die Öffnung 11 des Behälters 2 dichtend zu verschließen. Wie in Fig. 2a ebenfalls zu erkennen ist, erstreckt sich das an der Innenseite 5a der Seitenwand 5 angebrachte wandseitige In-Mould-Label 6 bis zu einem Kontaktbereich **15,** an welcher die Innenseite 5a der Seitenwand mit der Innenseite 3a des Deckels 3 in Kontakt kommt. Wie in Fig. 2a ebenfalls zu erkennen ist, weist der Deckel 3 an seiner Innenseite **3a** ein deckelseitiges In-Mould-Label **16** auf, welches sich bis in den Kontaktbereich 15 erstreckt und dort mit dem wandseitigen In-Mould-Label 6 des Behälters 2 überlappt. Das deckelseitige In-Mould-Label 16 erstreckt sich hierbei ausgehend von der Unterseite eines planen Abschnitts des Deckels 3 in einen U-förmig nach oben vorstehenden Teilbereich des Deckels 3. Das an der Außenseite 5b der Seitenwand 5 angebrachte In-Mould-Label 7 erstreckt sich hingegen nur bis zur Unterseite eines Stegs **17,** der zwischen der Außenseite 5a der Seitenwand 5 und der Schürze 14 gebildet ist, um den Rand 12 zu stabilisieren.

**Fig. 2b** zeigt einen Deckel 3, bei dem ein deckelseitiges Label 16' an der Innenseite 3a aufgebracht ist, das nach einem Spritzguss-Prozess zum Herstellen des Deckels 3 mit dem Deckel 3 verbunden wurde, d.h. bei dem Label 16' handelt es sich nicht um ein In-Mould-Label. Das Label 16' ist mit der Innenseite 3a des Deckels 3 in einem in Fig. 2b schwarz dargestellten Teilbereich durch Schweißen fest verbunden. Das nachträgliche Anbringen des Labels 16' an der Innenseite 3a des Deckels 3 ist sinnvoll, da die Eigenschaften des Labels 16', z.B. Barriere- oder Oberflächeneigenschaften, durch das Umspritzen beeinträchtigt oder zerstört werden könnten. Das in Fig. 2b dargestellte Label 16' weist einen radial über einen planen Abschnitt an der Innenseite 3a des Deckels überstehenden Abschnitt auf, der beim Aufsetzen des Deckels 3 auf den Behälter 2 nach oben umgeklappt wird, so dass sich das Label 16' bis zu dem in Fig. 2a dargestellten Kontaktbereich 15 erstreckt. Es versteht sich aber, dass der Deckel 3 alternativ auch an dem sich an den planen, horizontal verlaufenden Abschnitt an der Innenseite 3a des Deckels 3 radial nach außen anschließenden, nach oben vorstehenden Abschnitt an der Innenseite 3a des Deckels 3 befestigt werden kann, wie dies bei dem in Fig. 2a dargestellten In-Mould-Label 16 der Fall ist.

Wie in Fig. 2a,b ebenfalls zu erkennen ist, bildet der Deckel 3 an seiner Innenseite 3a zumindest in einem von dem deckelseitigen In-Mould-Label 16 bzw. von dem deckelseitigen Label 16' überdeckten Teilbereich eine abschnittsweise plane Fläche, wobei der plane, horizontal verlaufende Abschnitt und der plane, nach oben überstehende Abschnitt durch einen Knick ineinander übergehen, der einen vergleichsweise großen Radius aufweist. Die Innenseite 3a des Deckels weist daher keine Absätze / Erhebungen oder Vertiefungen auf, die ggf. vorhandene Barriereschichten bzw. Folien des In-Mould-Labels 16 beim Umspritzen beschädigen könnten. Auch bei dem nachträglich an der Innenseite 3a des Deckels 3 angebrachten Label 16' ist es günstig, wenn diese wie in Fig. 2a,b ausgebildet ist und keine Absätze bzw. Erhebungen / Vertiefungen aufweist.

An der Außenseite des in Fig. 2b gezeigten Labels 16' ist an dem radial überstehenden Abschnitt eine Abziehhilfe in Form einer Abziehlasche **16"** angeformt. Die Abziehlasche 16" vereinfacht das Abziehen des Labels 16' von der Innenseite 3a des Deckels 3. Die Abziehlasche 16" kann sich - abweichend von der Darstellung in Fig. 2b - im Wesentlichen in Richtung der Hochachse des Behälters 2, d.h. in vertikaler Richtung, erstrecken. Die Abziehlasche 16" erstreckt sich nicht in den Bereich des Klemmprofils des Deckels 3 hinein.

Es versteht sich, dass auch das in Fig. 2a gezeigte In-Mould-Label 16 eine oder mehrere Abziehhilfen z.B. in Form von Abziehlaschen oder dergleichen aufweisen kann, um das Lösen von der Innenseite 3a des Deckels 2 zu vereinfachen.

Es versteht sich weiterhin, dass auch das wandseitige In-Mould-Label 6 sowie das bodenseitige In-Mould-Label 18 eine oder mehrere Abziehhilfen, z.B. in Form von Abziehlaschen oder dergleichen aufweisen können, sofern diese lösbar mit dem Behälter 2 verbunden sind. Gleiches gilt für das wandseitige bzw. das bodenseitige Label (s.u.).

Fig. 1b zeigt ein solches wandseitiges In-Mould-Label 6, an das eine Abziehlasche 6" angeformt ist. Die Abziehlasche 6" erstreckt sich ausgehend von derjenigen Kante 8b, die in dem Überlappungsbereich 9 zum Innenraum des Behälters 2 frei liegt, in Umfangsrichtung entlang der Außenseite 6a des wandseitigen In-Mould-Labels 6 und ragt in den Innenraum des Behälters 2 hinein. Die Abziehlasche 6" überdeckt hierbei einen Teilbereich des wandseitigen In-Mould-Labels 6, der an den Überlappungsbereich 9 angrenzt.

Wie in Fig. 1b rechts dargestellt ist, ist die Abziehlasche 6" im oberen Bereich des Behälters 2 bzw. des wandseitigen In-Mould-Labels 6 ungefähr auf Höhe des Deckels 3 gebildet. Die Abziehlasche 6" kann sich insbesondere in den Kontaktbereich 15 mit dem Deckel 3 erstrecken bzw. nur in dem Kontaktbereich 15 gebildet sein. Durch die Abziehlasche 6" wird das Lösen der festen Verbindung der beiden Kanten 8a, 8b des wandseitigen In-Mould-Labels 6 in dem Überlappungsbereich 9 vereinfacht.

Wie in Fig. 1b ebenfalls zu erkennen ist, weist das wandseitige In-Mould-Label 6 in dem von der Abziehlasche 6" überdeckten Teilbereich eine Perforation 6‴ auf, die im gezeigten Beispiel benachbart zu dem Überlappungsbereich 9 angeordnet ist. Die Perforation 6‴ erstreckt sich im Wesentlichen entlang der Hochachse des Behälters 2 und kann z.B. durch Stanzen gebildet sein. Die Abziehlasche 6" schützt die Perforation 6‴ vor dem direkten Kontakt mit dem Füllgut. Die Perforation 6‴ ermöglicht ein erstes lokales Einreißen des In-Mould-Labels 6 und erleichtert daher das Ablösen des In-Mould-Labels 6 von der Innenseite 5a der Seitenwand 5 des Behälters 2 insbesondere für den Fall, dass die Verschweißung der beiden Kanten 8a,b des wandseitigen In-Mould-Labels 6 in dem Überlappungsbereich 9 sehr fest ist und sich daher nicht ohne weiteres lösen lässt.

**Fig. 3a** zeigt ein Detail des Übergangs zwischen der umlaufenden Seitenwand 5 und dem Boden 4 des Behälters 2. An einer Innenseite **4a** des Bodens 4 weist der Behälter 2 ein bodenseitiges In-Mould-Label 18 auf, welches die Innenseite 4a des Bodens 4 flächig überdeckt. Das bodenseitige In-Mould-Label 18 weist einen Abschnitt **19** auf, der sich entlang der Innenseite 5a der Seitenwand 5 erstreckt und der mit dem an der Innenseite 5a der Seitenwand 5 angebrachten wandseitigen In-Mould-Label 6 überlappt. Die Überlappung erfolgt hierbei derart, dass eine dem Inneren des Behälters 2 zugewandte Außenseite **19a** des Abschnitts 19 des bodenseitigen In-Mould-Labels 18 mit einer der Seitenwand 5 zugewandten Innenseite **6b** des wandseitigen In-Mould-Labels 6 überlappt. Der überlappende Abschnitt 19 des bodenseitigen In-Mould-Labels 6 ist mit dem wandseitigen In-Mould-Label fest verbunden, genauer gesagt verschweißt.

Wie anhand von Fig. 2a und von Fig. 3a,b erkennbar ist, ist bei dem Gebinde 1 der Innenraum, der von dem mit dem Deckel 3 verschlossenen Behälter 2 umgeben ist, vollständig mit dem bodenseitigen In-Mould-Label 18, dem wandseitigen In-Mould-Label 6 und dem an der Innenseite des Deckels 3 angebrachten deckelseitigen In-Mould-Label 16 abgedeckt. Durch die gegenseitige Anlage bzw. die Überlappung des wandseitigen In-Mould-Labels 6 mit dem deckeiseitigen In-Mould-Label 16 in dem Kontaktbereich 15 sowie die Verschweißung des überlappenden Abschnitts 16 des bodenseitigen In-Mould-Labels 18 mit dem wandseitigen In-Mould-Label 6 bilden die In-Mould-Label 6, 16, 18 eine durchgehende Barriere, welche ausgebildet sein kann, das Material des Behälters 2 bzw. des Deckels 3 vor dem ggf. aggressiven Füllgut zu schützen, das in den Behälter 2 abgefüllt wird. Abhängig von der jeweiligen Anwendung ist es möglich, die In-Mould-Label 6, 16, 18 mit geeigneten Barriere-Eigenschaften zu versehen, beispielsweise gegen Sauerstoff, Wasserdampf, etc.

Insbesondere können die In-Mould-Label 6, 16, 18 aus einem lebensmittelkonformen Material hergestellt werden, während dies bei dem Material des Behälters 2 und bei dem Material des Deckels 3 nicht der Fall ist, beispielsweise weil der Behälter 2 und der Deckel 3 nicht aus einem lebensmittelkonformen Material gebildet sind. Dennoch kann bei einem solchen Gebinde 1 die Lebensmittel-Konformität gewährleistet werden. Es versteht sich, dass ggf. nur der Behälter 2 aus einem nicht lebensmittelkonformen Material gebildet sein kann und dass in diesem Fall - oder generell - auf die Anbringung des deckelseitigen In-Mould-Labels 16 verzichtet werden kann, ohne dass die Lebensmittel-Konformität verlorengeht.

Bei dem in Fig. 3a gezeigten Beispiel ist das wandseitige In-Mould-Label 6 mit der Innenseite 5a der umlaufenden Seitenwand 5 fest verbunden. Auch das bodenseitige In-Mould-Label 18 ist mit der Innenseite 4a des Bodens 4 fest verbunden. Die feste Verbindung kommt dadurch zustande, dass das Kunststoff-Material der beiden In-Mould-Label 6, 18 kompatibel zu dem Kunststoff-Material des Behälters 2 ist, so dass sich beim Herstellen des Behälters 2 in einem weiter unten näher beschriebenen Spritzgussverfahren ein Schmelze-Verbund bildet. Sowohl bei dem Material des Behälters 2 als auch bei dem Material des Deckels 3 kann es sich beispielsweise um Polyethylen, Polypropylen, Polyamide oder Polyolefine handeln.

Bei dem in **Fig. 3b** gezeigten Detail ist das bodenseitige In-Mould-Label 18 als Ganzes lösbar mit der Innenseite 4a des Bodens 4 verbunden. Entsprechend ist das wandseitige In-Mould-Label 6 als Ganzes lösbar mit der Innenseite 5a der umlaufenden Seitenwand 5 verbunden. Die lösbare Verbindung ist sowohl bei dem wandseitigen In-Mould-Label 6 als auch bei dem bodenseitigen In-Mould-Label 18 durch einen Aufdruck **20a, 20b** gebildet, die an der Innenseite 6b des wandseitigen In-Mould-Labels 6 bzw. an der Innenseite **18b** des bodenseitigen In-Mould-Labels 18 gebildet ist und in Fig. 3a,b durch strichpunktierte Linien angedeutet ist. Der Aufdruck 20a, 20b ist aus einem Material gebildet, das nicht kompatibel zu dem Kunststoff-Material des Behälters 2 ist, so dass dieses sich bei der Herstellung des Behälters 2 nicht mit dem Kunststoff-Material des Behälters 2 verbindet.

Alternativ zu einem Aufdruck 20a, 20b an der Innenseite 6b, 18b der jeweiligen In-Mould-Label 6, 18 kann eine lösbare Verbindung zwischen den In-Mould-Labeln 6, 18 und dem Behälter 2 auch dadurch hergestellt werden, dass die Innenseite 6b, 18b mit einem Material, welches nicht mit dem Kunststoff-Material des Behälters 2 kompatibel ist, lackiert und/oder beschichtet wird. Auch eine Oberflächenbehandlung an der Innenseite 6b, 18b der jeweiligen In-Mould-Label 6, 18 kann dazu führen, dass das jeweilige In-Mould-Label 6, 18 sich nicht mit dem Kunststoff-Material des Behälters 2 verbindet.

In der Regel ist das jeweilige In-Mould-Label 6, 16, 18 aus einem oder mehreren Kunststoff-Materialien in der Art von einer oder mehreren Folien-Schichten oder dergleichen gebildet. Die Folien-Schichten können ein Laminat bilden, d.h. diese können miteinander verklebt sein. Das jeweilige In-Mould-Label 6, 16, 18 kann auch eine Schicht aus einem Vlies aufweisen oder auch aus einem Papier-Kunststoffverbund hergestellt werden.

Die lösbare Verbindung mit dem Kunststoff-Material des Behälters 3 kann auch dadurch hergestellt werden, dass das Kunststoff-Material des In-Mould-Labels 6, 16, 18, zumindest aber die der Innenseite 6b, 16b, 18b zugewandte Folien-Schicht, aus einem Kunststoff-Material gebildet ist, das nicht kompatibel zum Kunststoff-Material des Behälters 2 ist. Die lösbare Verbindung ermöglicht es, das bzw. die In-Mould-Label 6, 18 nach dem Gebrauch des Behälters 2 vom Behälter 2 zu lösen, so dass der Behälter 2 getrennt von den In-Mould-Labeln 6, 18 entsorgt oder ggf. recycelt werden kann. Das Lösen der In-Mould-Label 6, 18 von dem Behälter 2 kann automatisiert oder durch einen Bediener erfolgen. Gleiches gilt für das an dem Deckel 3 angebrachte deckelseitige In-Mould-Label 16.

Es ist auch möglich, dass eines oder beide innenseitige In-Mould-Label 6, 18 nicht als Ganzes, sondern nur in einem oder in mehreren Abschnitten bzw. Teilbereichen lösbar mit dem Behälter 2 verbunden sind, während in anderen Teilbereichen eine feste Verbindung mit dem Behälter 2 besteht. Dies ist günstig, da die In-Mould-Label 6, 18 in den Teilbereichen, in denen sie fest mit dem Behälter 2 verbunden sind, an dem Behälter 2 fixiert werden können. Die partielle Anbindung der In-Mould-Label 6, 18 an den Behälter 2 kann beispielsweise dadurch realisiert werden, dass die In-Mould-Label 6, 18 an ihren Innenseiten 6b, 18b in manchen Teilbereichen mit einer Beschichtung, einem Aufdruck oder dergleichen versehen sind, um eine lösbare Verbindung zu erzeugen, dies in anderen Teilbereichen aber nicht der Fall ist.

Bei dem in Fig. 3b gezeigten Beispiel kann der Aufdruck 20a, 20b an der jeweiligen Innenseite 6b, 18b der In-Mould-Label 6, 18 zusätzlich oder alternativ zur Herstellung der lösbaren Verbindung auch als Werbefläche bzw. als Informationsfläche dienen. In diesem Fall ist das jeweilige In-Mould-Label 6, 18 aus einem transparenten Material gebildet, um den Aufdruck 20a,b für einen Bediener sichtbar zu machen.

Es versteht sich, dass das die obigen Ausführungen zu den beiden innenseitigen In-Mould-Labeln 6, 18 des Behälters 2 auch für das an der Innenseite 3a des Deckels 3 angebrachte deckelseitige In-Mould-Label 16 gelten, d.h. auch dieses kann als Ganzes oder nur partiell mit dem Kunststoff-Material des Deckels 3 verbunden sein und zu diesem Zweck ggf. an seiner Innenseite 16b bedruckt, lackiert, oberflächenbehandelt, etc. sein. Auch das In-Mould-Label 16 des Deckels 3 kann an seiner Innenseite 16b einen Aufdruck aufweisen und aus einem transparenten Material gebildet sein, um den Aufdruck für einen Bediener erkennbar zu machen. Alternativ oder zusätzlich zu dem Aufdruck 20a, 20b an der jeweiligen Innenseite 6b, 18b der In-Mould-Label 6, 18 kann auch die jeweilige Außenseite 6a, 18a der In-Mould-Label 6, 19 mit einem Aufdruck versehen sein.

Bei dem in Fig. 3b gezeigten Beispiel ist an der Außenseite 18a des bodenseitigen In-Mould-Labels 18 und an der Außenseite 6a des wandseitigen In-Mould-Labels 6 jeweils eine Beschichtung **21a, 21b** aufgebracht, die zur Reduzierung der Anhaftung eines Füllguts dient. Je nach der Art des Füllguts kann es sich beispielsweise um eine oleophobe Beschichtung (bei einem ein Öl enthaltenden Füllgut) oder um eine hydrophobe Beschichtung (bei einem wasserhaltigen Füllgut) handeln. Entsprechend kann auch das deckelseitige In-Mould-Label 16 an seiner Außenseite 16a mit einer Beschichtung zur Reduzierung der Anhaftung eines Füllguts versehen sein. Es versteht sich, dass alternativ oder zusätzlich zu einer Beschichtung die Außenseite 6a, 16a, 18a des jeweiligen In-Mould-Labels 6, 16, 18 mit einer Oberflächenstruktur, beispielsweise in Form von Mikrostrukturen oder dergleichen, versehen sein kann, welche der Anhaftung eines Füllguts entgegenwirken und welche beispielsweise eine hydrophobe oder eine oleophobe Wirkung aufweisen können.

Zusätzlich zu dem außenseitigen wandseitigen In-Mould-Label 7 ist bei dem in **Fig. 3c** gezeigten Behälter 2 an einer Außenseite **4b** des Bodens 4 ein außenseitiges bodenseitiges Label **28'** angebracht. Im Gegensatz zu den In-Mould-Labeln 6, 7, 18 wird das bodenseitige Label 28' erst nach der Herstellung des Behälters 2 an dem Behälter 2 angebracht, d.h. mit der Außenseite 4b des Bodens 4 des Behälters 1 verbunden. Das bodenseitige Label 28' weist auch einen seitlich über den Boden 4 überstehenden Abschnitt 19' auf, der bei dem in Fig. 3c dargestellten Beispiel in Richtung auf die Seitenwand 5 des Behälters 2 umgeklappt ist und mit der Außenseite des außenseitigen wandseitigen In-Mould-Labels 7 überlappt.

Eine in Fig. 3c schematisch dargestellte Verbindungseinrichtung **29** dient zum Verschweißen des überstehenden Abschnitts 19' des bodenseitigen Labels 28' mit dem außenseitigen In-Mould-Label 7 sowie zum Verschweißen des bodenseitigen Labels 28' mit der Außenseite 4b des Bodens 4 des Behälters 2 (außerhalb des überstehenden Abschnitts 19'). Die Verbindungseinrichtung 29 dient bei dem in Fig. 3c dargestellten Beispiel auch dazu, den überstehenden Abschnitt 19' des außenseitigen Labels 28' umzuklappen, wenn der Behälter 2 von oben in eine Aufnahme der Verbindungseinrichtung 29 eingesetzt wird. Zum Verschweißen des überstehenden Abschnitts 19' des bodenseitigen Labels 28' mit dem außenseitigen wandseitigen In-Mould-Label 7 sowie mit der Außenseite 4b des Bodens 4 des Behälters 1 weist die Verbindungseinrichtung 29 mehrere beheizbare Kontaktelemente auf. Die Verbindungseinrichtung 29 ist Teil einer Vorrichtung 30 zur Herstellung von Behältern 2, die weiter unten näher beschrieben wird.

Der in **Fig. 3d** gezeigte Behälter 1 unterscheidet sich von dem in Fig. 3c gezeigten Behälter 2 lediglich darin, dass an der Außenseite 4b des Bodens 4 an Stelle des außenseitigen bodenseitigen Labels 28' ein bodenseitiges In-Mould-Label **28** angebracht ist. Bei dem in Fig. 3d gezeigten Beispiel werden das außenseitige wandseitige In-Mould-Label 7 und das außenseitige bodenseitige In-Mould-Label 28 in dem überlappenden Abschnitt 19' miteinander verschweißt, bevor die beiden außenseitigen In-Mould-Label 7, 28 gemeinsam in eine Matrize eines Form-Hohlraums eines Formwerkzeugs eingelegt werden, in den bei der Herstellung des Behälters 2 Kunststoff eingespritzt wird. Um ausgehend von der Matrize den Durchtritt des Kunststoffs in den Form-Hohlraum zu ermöglichen, weist das außenseitige bodenseitige In-Mould-Label 28 eine zentrale Öffnung 28a in Form einer Ausstanzung auf.

Die in Fig. 3c,d gezeigten Behälter 1 mit den überlappenden außenseitigen (In-Mould-)Labeln 7, 28 bzw. 28' sind insbesondere für den Fall günstig, dass auch die Außenseite des Behälters 1 eine Barriere-Wirkung aufweisen soll. Für die Barriere-Wirkung ist es insbesondere günstig, wenn die beiden Kanten 8a,b des außenseitigen In-Mould-Labels 7 überlappen und miteinander verschweißt sind, wie dies in Fig. 1c dargestellt ist.

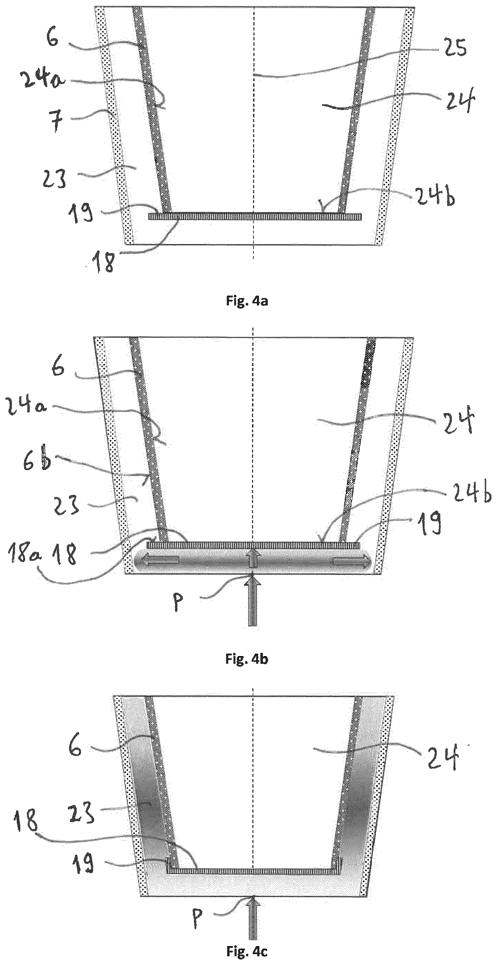

**Fig. 4a****-c** zeigen einen Form-Hohlraum **23,** der zwischen einem Formkern **24** und einer in Fig. 4a-c nicht bildlich dargestellten Matrize eines Formwerkzeugs gebildet ist und der zur Herstellung des in Fig. 1a gezeigten Behälters 2 durch das Einspritzen eines Kunststoff-Materials dient. Wie in Fig. 4a zu erkennen ist, ist an einer konisch verlaufenden Mantelfläche **24a** des Formkerns 24 das wandseitige In-Mould-Label 6 angebracht. An einer planen Stirnseite **24b** des Formkerns 24 ist das bodenseitige In-Mould-Label 18 angebracht, welches einen über die Stirnseite 24b des Formkerns 24 überstehenden randseitigen Abschnitt 19 aufweist. Das Aufbringen der In-Mould-Label 6, 18 auf den Formkern 24 kann auf eine weiter unten näher beschriebene Art und Weise erfolgen. Zusätzlich zu den beiden an dem Formkern 24 angebrachten In-Mould-Labeln 6, 18 befindet sich in dem Form-Hohlraum 23 auch das außenseitige In-Mould-Label 7, welches an einer Mantelfläche der Matrize des Formwerkzeugs angebracht ist.

Zur Herstellung des in Fig. 1a gezeigten Behälters 2 wird in den Form-Hohlraum 23 ausgehend von einer Einspritz-Position **P** an der Stirnseite der Matrize, die der Stirnseite 24b des Formkerns 24 gegenüberliegt, ein Kunststoff-Material eingespritzt, wie dies in Fig. 4b dargestellt ist. Das Kunststoff-Material verteilt sich ausgehend von der zentrischen Einspritz-Position P, die entlang einer Mittelachse **25** des Formkerns 24 angeordnet ist, radial entlang der Stirnseite 24b des Formkerns 24, bis das Kunststoff-Material den radial außen liegenden Rand des Form-Hohlraums 24 erreicht. Von dort aus verteilt sich das geschmolzene Kunststoff-Material weiter entlang des Zwischenraums zwischen der Mantelfläche 24a des Formkerns 24 und der Mantelfläche der Matrize, bis der Form-Hohlraum 23 vollständig mit Kunststoff-Material gefüllt ist. Wie anhand eine Vergleichs von Fig. 4b mit Fig. 4c erkennbar ist, klappt beim Einspritzen des Kunststoff-Materials der über die Stirnseite 24b des Formkerns 24 überstehenden Abschnitt 19 um und wird gegen die Innenseite 6b des wandseitigen In-Mould-Labels 6 gedrückt bzw. angeformt, so dass dessen Außenseite 18a mit dem wandseitigen In-Mould-Label 6 in Anlage gebracht wird und mit diesem überlappt.

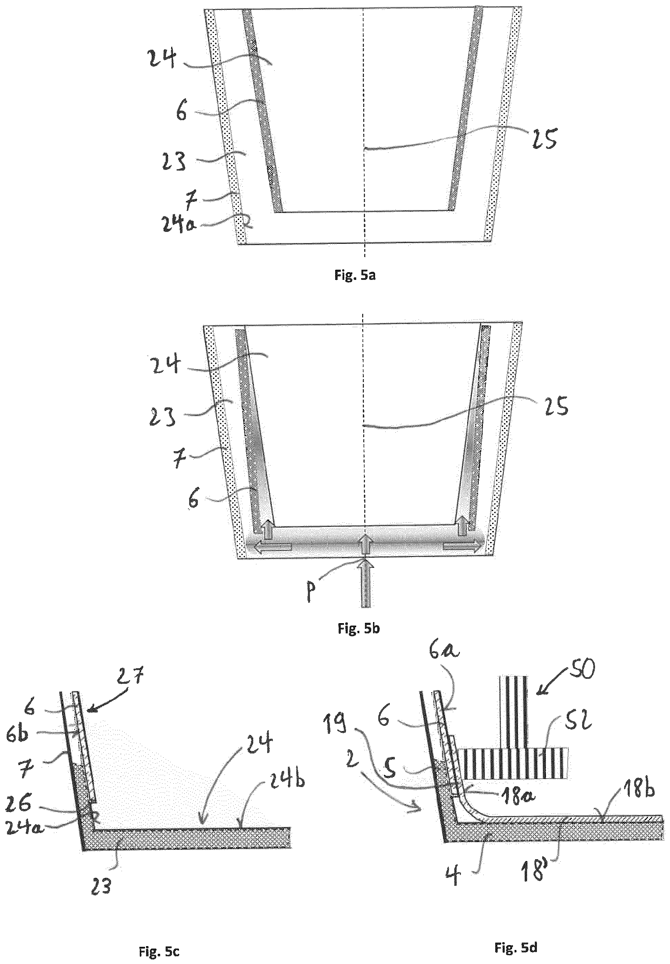

Durch den überlappenden Abschnitt 19 des bodenseitigen In-Mould-Labels 18 kann verhindert werden, dass sich das wandseitige In-Mould-Label 6 beim Einspritzen des Kunststoff-Materials in den Form-Hohlraum 23 von der Mantelfläche 24a des Formkerns 24 löst und von dem Kunststoff-Material hinterspritzt wird, wie dies bei dem in **Fig. 5a**,b gezeigten Beispiel dargestellt ist, bei dem kein bodenseitiges In-Mould-Label 18 vorhanden ist.

Um bei nicht vorhandenem bodenseitigen In-Mould-Label 18 ein Hinterspritzen des wandseitigen In-Mould-Labels 6 zu verhindern, weist der in **Fig. 5c** gezeigte Formkern 24 an seiner Mantelfläche 24a eine Stufe **26** auf, die von der Stirnseite 24b des Formkerns 24 beabstandet ist. Die Mantelfläche 24a des Formkerns 24 weist ausgehend von der Stufe 26 einen in radialer Richtung gegenüber der restlichen Mantelfläche 24a zurückgesetzten Abschnitt **27** auf, an dem das wandseitige In-Mould-Label 6 angebracht ist, das sich entsprechend ebenfalls nicht bis zur Stirnseite 24b des Formkerns 24 erstreckt. Die dem Form-Hohlraum 23 zugewandte Innenseite 6b des wandseitigen In-Mould-Labels 6 steht nicht über die Stufe 26 bzw. über den sich von der Stufe 26 bis zur Stirnseite 24b des Formkerns 24 erstreckenden Abschnitt der Mantelfläche 24a über und ist daher vor dem Hinterspritzen mit dem Kunststoff-Material geschützt, wie dies in Fig. 5c zu erkennen ist. Aufgrund des in Zusammenhang mit Fig. 5c beschriebenen Herstellungsprozesses steht das in Fig. 5c gezeigte wandseitige In-Mould-Label 6 über den nicht von dem wandseitigen In-Mould-Label 6 bedeckten Teilbereich an der Innenseite 5a der Seitenwand 5 des Behälters 2 über.

**Fig. 5d** zeigt eine Verbindungseinrichtung **50** zum festen Verbinden, genauer gesagt zum Verschweißen, eines überlappenden Abschnitts 19 eines bodenseitigen Labels 18' mit dem wandseitigen In-Mould-Label 6 von Fig. 5c nach dem Abschluss des Spritzguss-Prozesses. Die Verbindungseinrichtung 50 ist an einer nicht bildlich dargestellten Versiegelungs-/Schweiß-Station einer weiter unten näher beschriebenen Vorrichtung zur Herstellung von Behältern 2 gebildet. Der Behälter 2 ist hierbei in einer in Fig. 5d ebenfalls nicht bildlich dargestellten Aufnahme der Verbindungseinrichtung 50 abgelegt.

Die in Fig. 5d gezeigte Verbindungseinrichtung 50 weist ein Kontaktelement **52** in Form eines Schweißrings bzw. Schweißdorns auf, der von der Oberseite in den Behälter 2 eingefahren wird und der umfangsseitig mit der Außenseite 18a des bodenseitigen In-Mould-Labels 18' in Kontakt gebracht wird, um den überlappenden Abschnitt 19 des bodenseitigen Labels 18' durch einen Wärmeeintrag mit dem wandseitigen In-Mould-Label 6 zu verschweißen. Nach dem Ende des Schweißvorgangs wird das Kontaktelement 52 aus dem Behälter 2 ausgefahren und der Behälter 2 kann in einem Magazin für fertiggestellte Behälter 2 abgelegt werden.

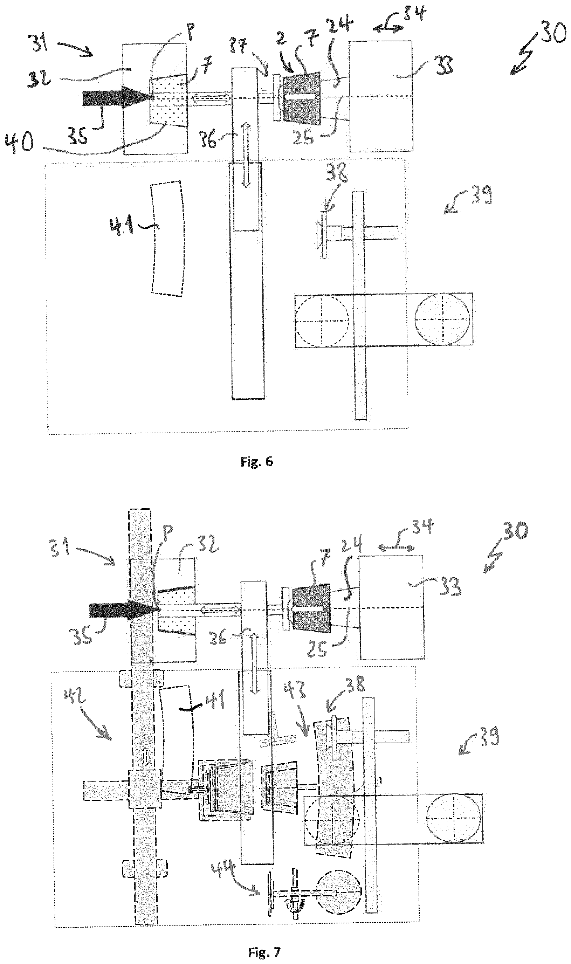

**Fig.** 6 zeigt eine Vorrichtung **30,** die zur Herstellung eines Behälters 2 ausgebildet ist, an dessen umlaufender Seitenwand 5 ein außenseitiges In-Mould-Label 7 angebracht ist. Die Vorrichtung 30, die eine Fertigungszelle in Form einer Spritzgießmaschine mit der Funktionalität zur Anbringung von In-Mould-Labeln bildet, weist ein Formwerkzeug **31** auf, das aus einem düsenseitigen Werkzeugteil **32,** im Folgenden Matrize genannt, und aus einem auswerferseitigen Werkzeugteil **33,** welches den Formkern 24 aufweist, gebildet ist. Das auswerferseitige Werkstückteil 33 mit dem Formkern 24 ist bei dem in Fig. 6 gezeigten Beispiel mit Hilfe einer durch einen Doppelpfeil angedeuteten Bewegungseinrichtung **34** in Richtung der Mittelachse 25 des Formkerns 24 relativ zur ortsfesten Matrize 32 verschiebbar, um den in Fig. 4a-c gezeigten Form-Hohlraum 23 zu bilden. Eine in Fig. 6 durch einen Pfeil angedeutete Einspritzeinrichtung **35** dient zum Einspritzen von Kunststoff-Material in den Form-Hohlraum 23 von Fig. 4a-c ausgehend von der Einspritz-Position P an der Matrize 32.

Fig. 6 zeigt das Formwerkzeug 31 in einer geöffneten Stellung, in welcher die Matrize 32 und der Formkern 24 voneinander beabstandet sind. Eine motorisch angetriebene Einlege- und Entnahmeeinrichtung **36** weist eine Halteeinrichtung **37** in Form eines Sauggreifers auf, um den Behälter 2 mit dem außenseitigen In-Mould-Label 7 aus dem Formwerkzeug 31 zu entnehmen und an einen Sauggreifer **38** eines Staplers **39** zu übergeben, welcher die fertigen Behälter 2 in einem nicht näher dargestellten Magazin ablegt. Auf Höhe der Halteeinrichtung 37 ist an der Einlege- und Entnahmeeinrichtung 36 ein konischer Kern **40** angebracht, der mittels einer durch einen Doppelpfeil angedeuteten Bewegungseinrichtung in die Matrize 32 eingefahren wird, um dort, genauer gesagt an der Mantelfläche der Matrize 32, ein außenseitiges In-Mould-Label 7 für die nachfolgende Herstellung eines weiteren Behälters 2 einzulegen. Das außenseitige In-Mould-Label wird in einem vorausgehenden Schritt mittels des konischen Kerns 40 der Einlege- und Entnahmeeinrichtung 36 aus einem gestrichelt angedeuteten Magazin **41** entnommen. Zeitparallel zum Anbringen bzw. Aufwickeln des außenseitigen In-Mould-Labels 7 auf dem konischen Kern 40 können die beiden Werkzeugteile 32, 33 des Formwerkzeugs 31 unter Ausbildung des Form-Hohlraums 23 aufeinander zu bewegt und ein neuer Behälter 2 hergestellt werden, indem auf die weiter oben beschriebene Weise Kunststoff-Material in den Form-Hohlraum 23 eingespritzt wird.

Die in **Fig. 7** gezeigte Vorrichtung 30 ermöglicht es, den in Fig. 1a gezeigten Behälter 2 herzustellen, an dem zusätzlich zu dem außenseitigen In-Mould-Label 7 auch die beiden innenseitigen In-Mould-Label 6, 18 angebracht sind. Um dies zu erreichen, weist die Vorrichtung 30 zusätzlich zu den in Zusammenhang mit Fig. 6 beschriebenen Komponenten eine Übergabeeinrichtung **42** zum Übergeben des bodenseitigen In-Mould-Labels 18 sowie des wandseitigen In-Mould-Labels 6 an den Formkern 24 des Formwerkzeugs 31 auf. Zusätzlich zu der Übergabeeinrichtung 42 weist die in Fig. 7 gezeigte Vorrichtung 30 auch eine Bereitstellungseinrichtung **43** zur Bereitstellung des wandseitigen In-Mould-Labels 6 zur Übergabe an die Übergabeeinrichtung 42 sowie eine weitere Bereitstellungseinrichtung **44** zur Bereitstellung des bodenseitigen In-Mould-Labels 18 zur Übergabe an die Übergabeeinrichtung 42 auf.

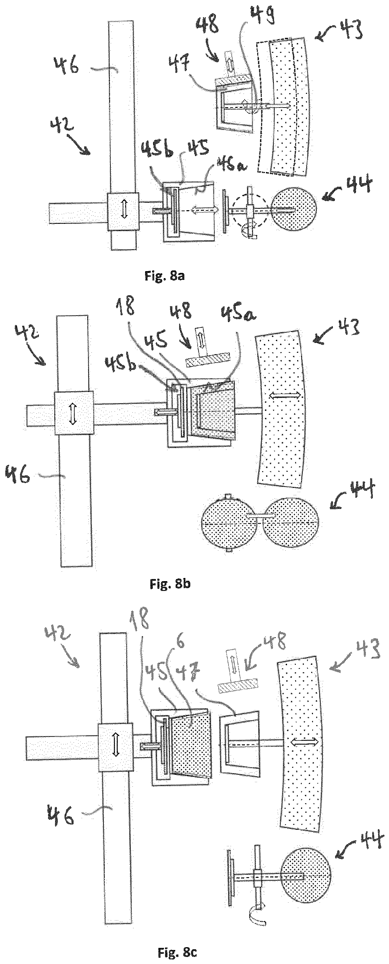

**Fig. 8a****-c** zeigen das Zusammenspiel der beiden Bereitstellungseinrichtungen 43, 44 bei der Übergabe der beiden innenseitigen In-Mould-Label 6, 18 an die Übergabeeinrichtung 42. Wie in Fig. 8a gezeigt ist, weist die Übergabeeinrichtung 42 einen schalenförmigen Grundkörper **45** auf, an dessen Innenseite eine konische Mantelfläche **45a** gebildet ist, die zur Aufnahme des wandseitigen In-Mould-Labels 6 dient. An einer Stirnseite **45b** des schalenförmigen Grundkörpers 45 ist ein Hohlraum gebildet, der zur Aufnahme des bodenseitigen In-Mould-Labels 18 dient. Der schalenförmige Grundkörper 45 ist an einem motorisch angetriebenen Schlitten angebracht, der entlang einer Übergabeachse **46** bewegt werden kann, um den schalenförmigen Grundkörper 45 in den Bereich des Formwerkzeugs 31 zu bewegen.

In Fig. 8a ist dargestellt, wie das bodenseitige In-Mould-Label 18 von der weiteren Bereitstellungseinrichtung 44 an die Stirnseite 45b des schalenförmigen Grundkörpers 45 übergeben wird. Das bodenseitige In-Mould-Label 18 wird hierbei durch den schalenförmigen Grundkörper 45 hindurch mittels einer durch einen Doppelpfeil angedeuteten Bewegungseinrichtung an der Stirnseite 45b des Grundkörpers 45, genauer gesagt an einer Halterung in dem dort gebildeten Hohlraum, abgelegt. Zeitparallel wird das wandseitige In-Mould-Label 6 aus einem Magazin entnommen und vereinzelt sowie an einer Mantelfläche eines konusförmigen Kerns **47** der Bereitstellungseinrichtung 43 angebracht. Im einfachsten Fall wird das In-Mould-Label 6 hierbei auf dem Kern 47 abgelegt bzw. auf den Kern 47 fallengelassen. Für den Fall, dass die Position der beiden Kanten 10a, 10b bzw. des Überlappungsbereichs 9 in Umfangsrichtung variabel gewählt werden soll, kann der Kern 47 mit Hilfe einer Rotationsvorrichtung **49** um seine Längsachse gedreht werden. Alternativ oder zusätzlich ist es auch möglich, zur Ausrichtung der Position des Überlappungsbereichs 9 den schalgenförmigen Grundkörper 45 um seine (Mittel-)Achse zu drehen. Die Bereitstellungseinrichtung 43 weist auch eine Schweißeinrichtung **48** auf, welche die beiden in Fig. 1b dargestellten gegenüberliegenden Kanten 8a, 8b in dem Überlappungsbereich 9 miteinander verschweißt. Zu diesem Zweck weist die Schweißeinrichtung 48 ein nicht näher bezeichnetes Kontaktelement (Schweißbalken) auf, welches dem wandseitigen In-Mould-Label 6 die für das Verschweißen erforderliche Wärme zuführt. Es versteht sich, dass das Verschweißen auch auf andere Weise erfolgen kann, beispielsweise durch Ultraschall-Schweißen.

In Fig. 8b wurde der schalenförmige Grundkörper 45 nach der Aufnahme des bodenseitigen In-Mould-Labels 18 entlang der Übergabeachse 46 verschoben, um das wandseitige In-Mould-Label 6 aufzunehmen. Zu diesem Zweck wird der schalenförmige Grundkörper 45 in Richtung auf den konusförmigen Kern 47 mit dem an der Mantelfläche angebrachten wandseitigen In-Mould-Label 6 bewegt und das In-Mould-Label 6 wird an der konischen Mantelfläche 45a an der Innenseite des schalenförmigen Grundkörpers 45 angebracht. Die Mantelfläche 45a an der Innenseite des schalenförmigen Grundkörpers 45 ist hierbei passgenau an die Geometrie des konusförmigen Kerns 47 abgestimmt. Parallel dazu wird ein neues bodenseitiges In-Mould-Label 18 von der weiteren Bereitstellungseinrichtung 44 aus einem nicht näher bezeichneten Magazin entnommen und vereinzelt. Zeitparallel wird ein neues wandseitiges In-Mould-Label 6 aus einem Magazin entnommen und vereinzelt.

In Fig. 8c hat der schalenförmige Grundkörper 45 das bodenseitige In-Mould-Label 18 und das wandseitige In-Mould-Label 6 aufgenommen und ist bereit zur Übergabe der beiden In-Mould-Label 6, 18 an den Formkern 24 des Formwerkzeugs 31. Parallel dazu kann ein neues wandseitiges In-Mould-Label 6 auf den konusförmigen Kern 47 der Bereitstellungseinrichtung 43 aufgelegt und aufgewickelt werden.

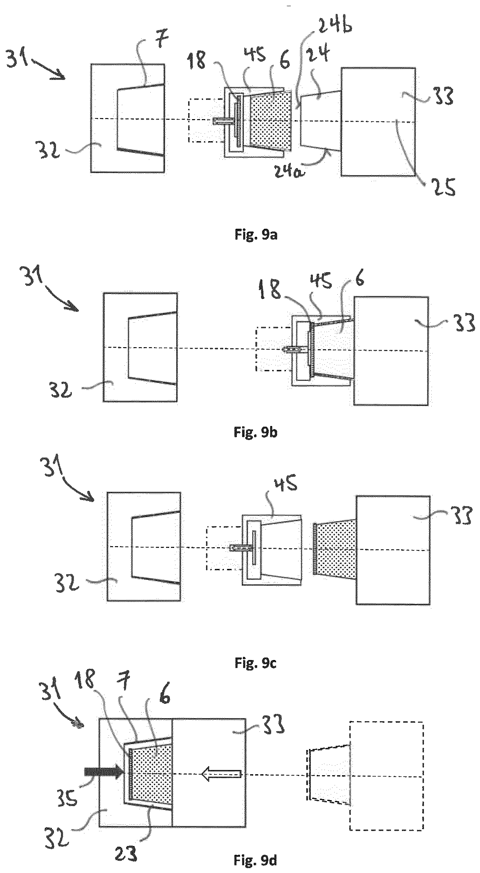

**Fig. 9a****-d** zeigen das Formwerkzeug 31 bei der Übergabe der beiden In-Mould-Label 6, 18 an den Formkern 24. Wie in Fig. 9a zu erkennen ist, wird der schalenförmige Grundkörper 45 zunächst entlang der Übergabeachse 46 (vgl. Fig. 8a-c) zwischen die Matrize 32 und den Formkern 24 des Formwerkzeugs 31 bewegt. Der schalenförmige Grundkörper 45 wird nachfolgend entlang der Mittelachse 25 in Richtung auf den Formkern 24 zu bewegt (vgl. Fig. 9b). Anschließend wird das wandseitige In-Mould-Label 6 an die Mantelfläche 24a des Formkerns 24 übergeben und das stirnseitige In-Mould-Label 18 wird an die Stirnseite 24b des Formkerns 24 übergeben. Die Mantelfläche 45a des schalenförmigen Grundkörpers 45 ist hierbei geometrisch an die Mantelfläche 24a des Formkerns 24 abgestimmt. Die beiden In-Mould-Label 6, 18 werden hierbei durch geeignete Maßnahmen (Vakuum / Statik) an dem konusförmigen Kern 24 fixiert.

Nach der Übergabe wird der schalenförmige Grundkörper 45 in die in Fig. 9a gezeigte Stellung zurückbewegt und entlang der Übergabeachse 46 aus dem Formwerkzeug 31 gefahren (vgl. Fig. 9c). Wie in Fig. 9d dargestellt ist, wird nachfolgend das Formwerkzeug 31 geschlossen bzw. zugefahren, um den Form-Hohlraum zwischen der Matrize 32 und dem auswerferseitigen Werkzeugteil 33 zu bilden. Mit Hilfe der Einspritzeinrichtung 35 wird nachfolgend Kunstsoff-Material in den Form-Hohlraum 23 eingespritzt, um den in Fig. 1a gezeigten Behälter 2 herzustellen.

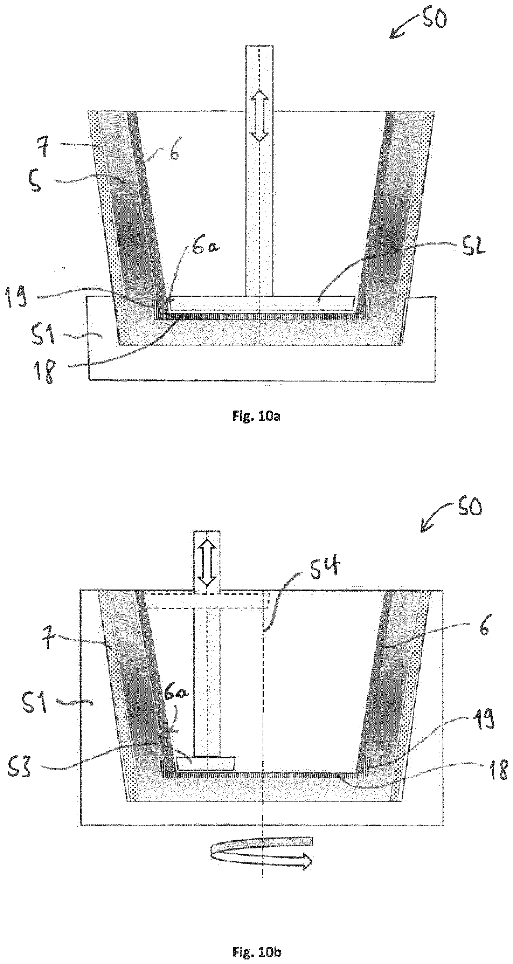

**Fig. 10a**,b zeigen schließlich zwei Beispiele für eine Verbindungseinrichtung 50 zum festen Verbinden, genauer gesagt zum Verschweißen, des überlappenden Abschnitts 19 des bodenseitigen In-Mould-Labels 18 mit dem wandseitigen In-Mould-Label 6. Die Verbindungseinrichtung 50 ist an einer Versiegelungs-/Schweiß-Station der Vorrichtung 30 gebildet, die beispielsweise an dem in Fig. 7 gezeigten Stapler 39 vorgesehen sein kann. Der Behälter 2 wird nach der Übernahme von der Einlege- und Entnahmeeinrichtung 36 durch den Stapler 39 mit Hilfe des Staplers 39 in einer Aufnahme **51** abgesetzt, die in Fig. 10a,b dargestellt ist.

Die in Fig. 10a gezeigte Verbindungseinrichtung 50 weist ein Kontaktelement 52 in Form eines Schweißrings bzw. Schweißdorns auf, der von der Oberseite in den Behälter 2 eingefahren wird und der umfangsseitig mit der Außenseite 6a des wandseitigen In-Mould-Labels 6 in Kontakt gebracht wird, um den überlappenden Abschnitt 19 des bodenseitigen In-Mould-Labels 18 durch einen Wärmeeintrag mit dem wandseitigen In-Mould-Label 6 zu verschweißen. Nach dem Ende des Schweißvorgangs wird das Kontaktelement 52 aus dem Behälter 2 ausgefahren und der Behälter 2 wird von dem Stapler 39 in das Magazin für fertiggestellte Behälter 2 abgelegt.

Die in Fig. 10b dargestellte Verbindungseinrichtung 50 unterscheidet sich von der in Fig. 10a gezeigten Verbindungseinrichtung 50 im Wesentlichen dadurch, dass die Aufnahme 51 um eine vertikale Achse **54** drehbar ist und dass der Behälter 2 bei der Drehung um seine Hochachse z.B. durch Vakuum-Ansaugung fixiert wird. Die in Fig. 10b dargestellte Verbindungseinrichtung 50 weist ein Kontaktelement **53** auf, das wie in Fig. 10a in den Behälter 2 eingeführt und das punktuell bzw. linienförmig an seinem Außenumfang mit der Außenseite 6a des wandseitigen In-Mould-Labels 6 in Kontakt gebracht wird. Es versteht sich, dass die Verbindungseinrichtung 50 von Fig. 10b mehrere Kontaktelemente 53 aufweisen kann. Grundsätzlich kann die feste Verbindung bzw. das Verschweißen auch auf andere Weise als in Fig. 10a,b dargestellt erfolgen, beispielsweise durch Ultraschall-Schweißen oder dergleichen.

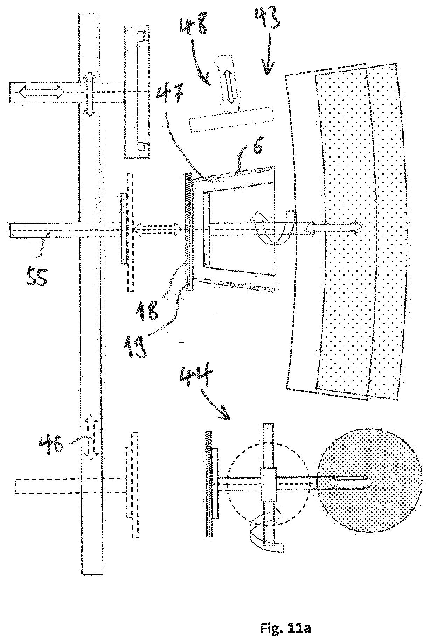

**Fig. 11a****-c** zeigen analog zu Fig. 8a-c das Zusammenspiel der beiden Bereitstellungseinrichtungen 43, 44 bei der Übergabe der beiden innenseitigen In-Mould-Label 6, 18 an die Übergabeeinrichtung 42 bei einer Vorrichtung 30, die gegenüber der in Fig. 7 dargestellten Vorrichtung 30 modifiziert wurde. Fig. 11a zeigt die Bereitstellungseinrichtung 43 nach dem Anbringen des wandseitigen In-Mould-Labels 6 an der Mantelfläche des konusförmigen Kerns 47 und dem Verschweißen der gegenüberliegenden Kanten des wandseitigen In-Mould-Labels 6 in dem Überlappungsbereich 9 mittels der Schweißeinrichtung 48.

Zeitparallel zum Verschweißen des wandseitigen In-Mould-Labels 6 wird wie in Fig. 8a dargestellt mittels der weiteren Bereitstellungseinrichtung 44 das bodenseitige In-Mould-Label 18 vereinzelt. Im Gegensatz zu der Vorrichtung 30 von Fig. 8a wird das bodenseitige In-Mould-Label 18 aber nicht an die Übergabeeinrichtung 42 übergeben, sondern an eine Transporteinrichtung **55,** welche das bodenseitige In-Mould-Label 18 zunächst parallel zur Übergabeachse 46 und nachfolgend in Richtung auf die Stirnseite des Kerns 47 zu bewegt, um das bodenseitige In-Mould-Label 18 an der Stirnseite des Kerns 47 anzubringen. Das bodenseitige In-Mould-Label 18 kann z.B. mittels eines Unterdrucks an der Stirnseite des Kerns 47 gehalten werden und weist einen seitlich über die Stirnseite des Kerns 47 überstehenden Abschnitt 19 auf. Nach dem Positionieren wird die Transporteinrichtung 55 zurückgezogen und entlang der Entnahmerichtung 36 zur weiteren Bereitstellungseinrichtung 44 bewegt, um ein weiteres bodenseitiges In-Mould-Label 6 aufzunehmen.

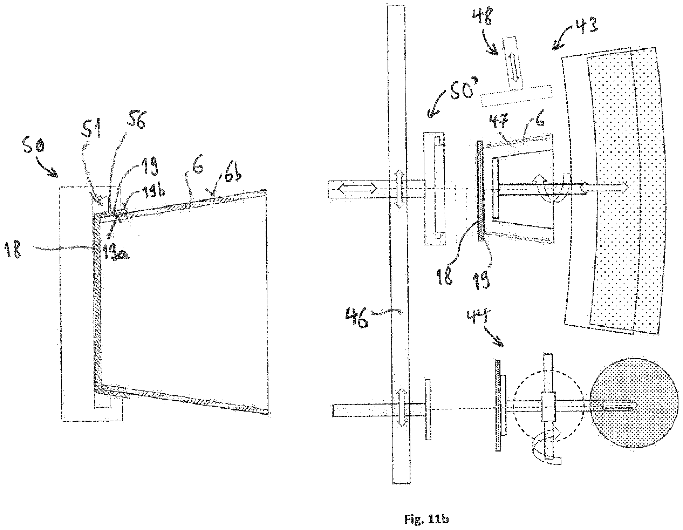

Wie in Fig. 11b zu erkennen ist, wird nach dem Positionieren des bodenseitigen In-Mould-Labels 18 an der Stirnseite des Kerns 47 eine mobile Verbindungseinrichtung 50' zunächst in Entnahmerichtung 36 und nachfolgend in Richtung auf die Stirnseite des Kerns 47 bewegt, an welcher das bodenseitige In-Mould-Label 18 angebracht ist. Bei der Bewegung der Verbindungseinrichtung 50' in Richtung auf den Kern 47 wird ein stirnseitiger Abschnitt des Kerns 47 in einer Aufnahme 51 der mobilen Verbindungseinrichtung 50' aufgenommen. Der überstehende Abschnitt 19 des bodenseitigen In-Mould-Labels 18 wird hierbei in Richtung auf das wandseitige In-Mould-Label 6 umgeklappt, wie in Fig. 11b auf der linken Seite dargestellt ist. Ein ringförmig umlaufendes Kontaktelement **56** der Verbindungseinrichtung 50' wird mit einer (späteren) Innenseite 19b des überstehenden Abschnitts 19 in Kontakt gebracht, um diesen mit dem wandseitigen In-Mould-Label 6 zu verschweißen. Der überstehende Abschnitt 19 überlappt hierbei mit seiner (späteren) Außenseite 19a mit der (späteren) Innenseite 6b des wandseitigen In-Mould-Labels 6.

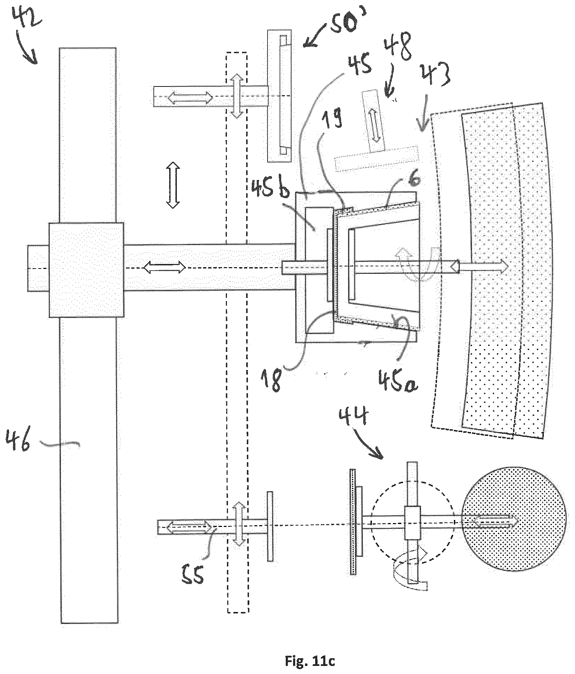

Fig. 11c zeigt die Übergabeeinrichtung 42, die wie in Fig. 7 einen schalenförmigen Grundkörper 45 aufweist, an dessen Innenseite eine konische Mantelfläche 45a gebildet ist, an der das wandseitige In-Mould-Label 6 aufgenommen wird, wobei an der Stirnseite 45b des schalenförmigen Grundkörpers 45 das bodenseitige In-Mould-Label 18 aufgenommen wird, das mit dem wandseitigen In-Mould-Label 6 verschweißt ist. Die Übergabeeinrichtung bzw. der schalenförmige Grundkörper 45 wird wie weiter oben in Zusammenhang mit Fig. 7 beschrieben wurde in Entnahmerichtung 36 bewegt, um die beiden miteinander verbundenen In-Mould-Label 6, 18 an den Formkern 24 zu übergeben. Durch das Verbinden der beiden In-Mould-Label 6, 18 vor dem Einspritzen des Kunststoffs in den Form-Hohlraum 23 kann die Problematik des Hinterspritzens vermieden werden.

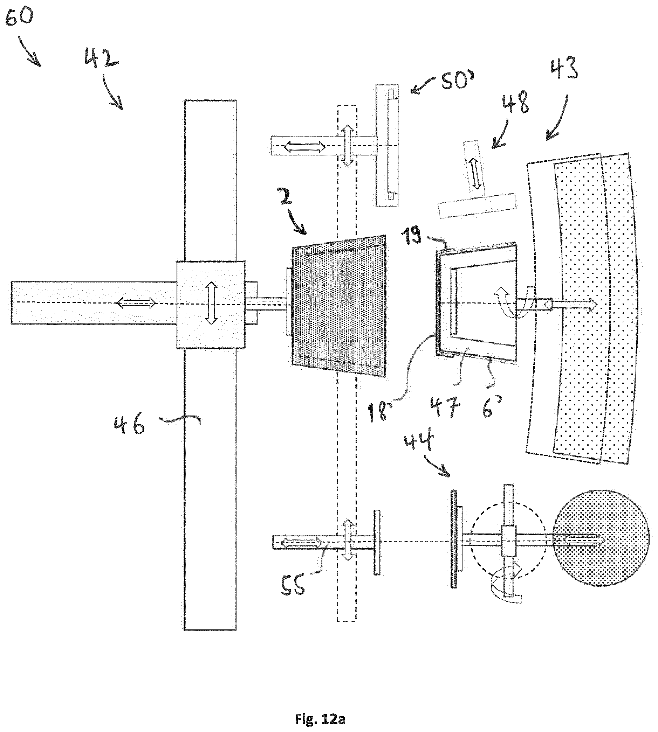

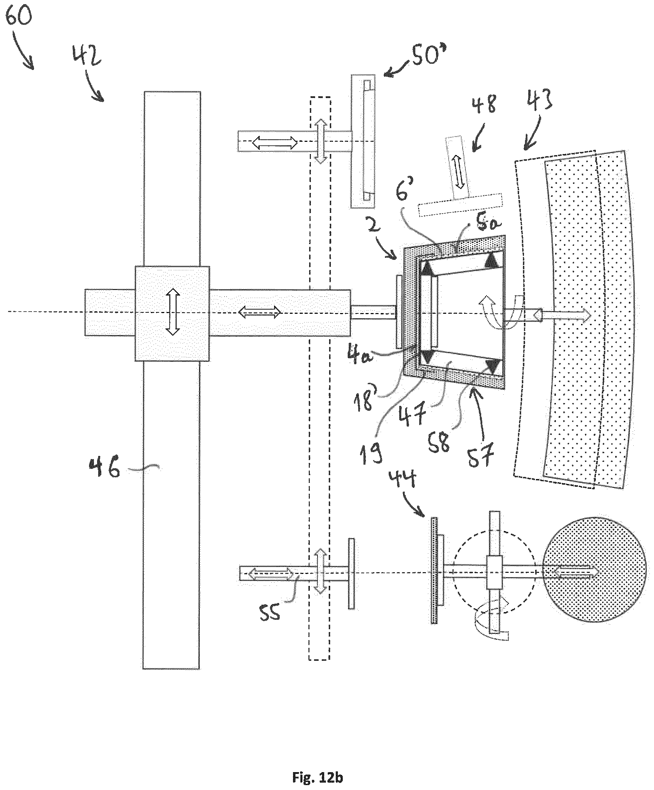

**Fig. 12a**,b zeigen eine Applikations-Vorrichtung **60,** die im gezeigten Beispiel einen Bestandteil einer weiteren Vorrichtung 30 bildet, die gegenüber der in Fig. 7 sowie gegenüber der in Fig. 11a-c dargestellten Vorrichtung 30 modifiziert ist. Die Applikations-Vorrichtung 60 umfasst die Bereitstellungseinrichtung 43 zur Bereitstellung eines wandseitigen Labels 6', die weitere Bereitstellungseinrichtung 44 zur Bereitstellung eines bodenseitigen Labels 18' sowie die Verbindungseinrichtung 50' der in Fig. 11a-c gezeigten Vorrichtung 30.

Diese weitere Vorrichtung 30 unterscheidet sich von der in Fig. 11a-c dargestellten Vorrichtung 30 im Wesentlichen dadurch, dass die mittels der in Fig. 11b dargestellten Verbindungseinrichtung 50' miteinander verbundenen, an dem Kern 47 angebrachten Label 6', 18' nicht mittels der Übergabeeinrichtung 42 an den Formkern 24 übergeben werden, sondern an dem Kern 47 verbleiben, d.h. diese werden nicht als In-Mould-Label 6, 18 verwendet.

Bei der in Fig. 12a,b gezeigten Applikations-Vorrichtung 60 dient die Übergabeeinrichtung 42 dazu, den Behälter 2 entlang der Übergabeachse 46 aus dem Formwerkzeug 31 zu entnehmen und im Bereich des Kerns 47 zu positionieren, so dass der Kern 47 an der Innenseite des Behälters 2 in Anlage gebracht wird. Mit Hilfe einer weiteren Verbindungseinrichtung **57** in Form einer Schweißeinrichtung, die ebenfalls Teil der Applikations-Vorrichtung 60 ist, die in den Kern 47 integriert ist und die mehrere beheizbare Kontaktelemente **58** aufweist, werden das wandseitige Label 6' mit der Innenseite 5a der Seitenwand 5 des Behälters 2 und das bodenseitige Label 18' mit der Innenseite 4a des Bodens 4 des Behälters 2 konturgetreu verschweißt.

Die Verschweißung an der Innenseite 5a der Seitenwand 5 des Behälters erfolgt im gezeigten Beispiel in zwei Teilbereichen, von denen der erste an einem dem Boden 4 abgewandten Ende des wandseitigen Labels 6' gebildet ist und von denen der zweite in dem überlappenden Abschnitt 19 gebildet ist. In den jeweiligen Teilbereichen sind die durch Pfeile angedeuteten beheizbaren Kontaktelemente 58 der Verbindungseinrichtung 57 angeordnet. Zusätzlich kann mit Hilfe von - in Fig. 12c nicht bildlich dargestellten - beheizbaren Kontaktelementen 58 das bodenseitige Label 18' mit der Innenseite des Bodens 4 des Behälters 2 ganz oder in einem oder mehreren Teilbereichen verschweißt werden.

Die in Fig. 12a,b gezeigte Applikations-Vorrichtung 60 kann auch eigenständig, d.h. ohne Integration in die weitere Vorrichtung 30, dazu verwendet werden, um das bodenseitige Label 18' an der Innenseite 4a des Bodens 4 sowie das wandseitige Label 6' an der Innenseite 5a der Seitenwand 5 eines Behälters 2 anzubringen, der an demselben oder einem anderen Ort mittels einer geeigneten Maschine, z.B. im Spritzguss-Verfahren, hergestellt wurde. In diesem Fall kann auf die Übergabeeinrichtung 42 ggf. vollständig verzichtetet werden oder diese kann ausgebildet sein, den Behälter 2 aus einem Behälter-Magazin zu entnehmen und zu vereinzeln.

Die nachträgliche Anbringung der Label 6', 18' ist insbesondere günstig, wenn die Label 6', 18' eine Oberflächenstruktur bzw. eine Beschichtung aufweisen, die beim Umspritzen mit Kunststoff in dem Formwerkzeug 31 zerstört würde.

Die Steuerung der in Fig. 6 bis Fig. 10a,b und Fig. 11a-c bzw. 12a,b beschriebenen Vorrichtung 30 bzw. der Applikations-Vorrichtung 60 erfolgt mit Hilfe von nicht bildlich dargestellten Steuerungskomponenten, z.B. in Form eines Steuerungscomputers, welcher die Bewegung der jeweiligen Komponenten, des Einspritzvorgangs, der Haltefunktionen (Statik / Vakuum) etc. in geeigneter Weise steuert.

Obgleich in den obigen Bespielen ein Behälter 2 in Form eines Eimers mit einer konisch verlaufenden Seitenwand 5 und einem runden Querschnitt beschrieben wurde, können auch Behälter 2 mit anderer Geometrie, beispielsweise mit einer rechteckigen, quadratischen oder ovalen Grundform auf die oben beschriebene Weise hergestellt werden. Auch kann an Stelle eines Behälters 2 in Form eines Eimers eine andere Art von Behälter 2, beispielsweise eine Dose oder dergleichen, auf die oben beschriebene Weise hergestellt werden bzw. ausgebildet sein.

## Patentansprüche

1. Behälter (2) aus Kunststoff in Form eines Eimers, mit einem Boden (4) und mit einer umlaufenden Seitenwand (5), die im Bereich einer Öffnung (11) des Behälters (2) einen umlaufenden Rand (12) mit einem Eingriffsbereich (13) aufweist, wobei der Eingriffsbereich (13) ein Klemmprofil zum Zusammenwirken mit einem Klemmprofil an einem Deckel (3) aufweist, um die Öffnung (11) des Behälters (2) zu verschließen, wobei an einer Innenseite (5a) der umlaufenden Seitenwand (5) und an einer Innenseite (4a) des Bodens (4) mindestens ein In-Mould-Label (6, 18) angebracht ist,
wobei
dass an der Innenseite (5a) der Seitenwand (5) ein wandseitiges In-Mould-Label (6) angebracht ist, das sich bis zu einem Kontaktbereich (15) mit dem Deckel (3) erstreckt, und
dass an der Innenseite (4a) des Bodens (5) ein bodenseitiges In-Mould-Label (18) angebracht ist, wobei das bodenseitige In-Mould-Label (18) einen sich entlang der Innenseite (5a) der Seitenwand (5) erstreckenden Abschnitt (19) aufweist, der an seiner Außenseite (19a) mit einer Innenseite (6b) des wandseitigen In-Mould-Labels (6) überlappt.

2. Behälter nach Anspruch 1, bei dem das wandseitige In-Mould-Label (6) als Ganzes lösbar mit der Innenseite (5a) der umlaufenden Seitenwand (5) verbunden ist und/oder bei dem das bodenseitige In-Mould-Label (18) als Ganzes lösbar mit der Innenseite (5a) des Bodens (4) und der Seitenwand (5) verbunden ist.

3. Behälter nach Anspruch 2, bei dem an dem wandseitigen In-Mould-Label (6) eine Abziehhilfe, bevorzugt eine Abziehlasche (6"), angeformt ist, die einen Teilbereich des wandseitigen In-Mould-Labels (6) an seiner Außenseite (6a) überdeckt und die sich bevorzugt bis in den Kontaktbereich (15) mit dem Deckel (3) erstreckt, wobei die Abziehhilfe bevorzugt angrenzend zu einem Überlappungsbereich (9) gebildet ist, an dem zwei in Umfangsrichtung gegenüber liegende Kanten (8a, 8b) des wandseitigen In-Mould-Labels (6) sich überlappen und fest miteinander verbunden, insbesondere verschweißt sind.

4. Behälter nach Anspruch 3, bei dem das wandseitige In-Mould-Label (6) in dem von der Abziehhilfe überdeckten Teilbereich eine Perforation (6‴) aufweist, die bevorzugt benachbart zu dem Überlappungsbereich (9) verläuft.

5. Behälter nach einem der Ansprüche 2 bis 4, bei dem eine Innenseite (6b) des wandseitigen In-Mould-Labels (6) als Ganzes und/oder eine Innenseite (18b) des bodenseitigen In-Mould-Labels (18) als Ganzes zur Herstellung der lösbaren Verbindung beschichtet, lackiert, bedruckt und/oder oberflächenbehandelt ist.

6. Behälter nach einem der vorhergehenden Ansprüche, bei dem eine Außenseite (6a) des wandseitigen In-Mould-Labels (6) und/oder eine Außenseite (18a) des bodenseitigen In-Mould-Labels (18) Oberflächenstrukturen und/oder eine Beschichtung (21a, 21b) zur Reduzierung der Anhaftung eines Füllguts aufweisen.

7. Behälter nach einem der vorhergehenden Ansprüche, bei dem das bodenseitige In-Mould-Label (18) und/oder das wandseitige In-Mould-Label (6) aus einem lebensmittelkonformen Material hergestellt sind, wobei der Behälter (2) bevorzugt zumindest teilweise aus einem Regenerat-Material gebildet ist.

8. Behälter nach einem der vorhergehenden Ansprüche, welcher an einer Außenseite (5b) der umlaufenden Seitenwand (5) und/oder an einer Außenseite (4b) des Bodens (4) mindestens ein außenseitiges In-Mould-Label (7, 28) oder ein außenseitiges Label (28') aufweist.

9. Behälter nach einem der vorhergehenden Ansprüche, bei dem das wandseitige In-Mould-Label (6), das bodenseitige In-Mould-Label (18), das außenseitige In-Mould-Label (7) und/oder das außenseitige Label (28') eine oder mehrere Folien-Schichten, ein Vlies oder einen Papier-Kunststoffverbund aufweisen, ein Laminat bilden und/oder bedruckt sind.

10. Behälter nach einem der vorhergehenden Ansprüche, bei dem das wandseitige In-Mould-Label (6), das bodenseitige In-Mould-Label (18), das außenseitige In-Mould-Label (7) und/oder das außenseitige Label (28') aus einem bevorzugt transparenten Material gebildet und an ihrer Innenseite (6b, 18b) und/oder an ihrer Außenseite (6a, 18a) bedruckt sind.

11. Gebinde (1), umfassend:
einen Behälter (2) nach einem der vorhergehenden Ansprüche, sowie einen Deckel (3), umfassend: ein Klemmprofil zum Zusammenwirken mit dem Klemmprofil an dem Eingriffsbereich (13) an dem umlaufenden Rand (12) des Behälters (2), um die Öffnung (11) an dem Behälter (2) zu verschließen.

12. Gebinde nach Anspruch 11, bei dem der Deckel (3) an seiner Innenseite (3a) mindestens ein deckelseitiges In-Mould-Label (16) und/oder ein zumindest in einem Teilbereich mit dem Deckel (3) verbundenes Label (16') aufweist, welches die Innenseite (3a) des Deckels (3) zumindest bis zu dem Kontaktbereich (15) mit dem Behälter (2) überdeckt.

13. Gebinde nach Anspruch 11 oder 12, bei dem das deckelseitige In-Mould-Label (16) und/oder das deckelseitige Label (16') als Ganzes lösbar mit der Innenseite (3a) des Deckels (3) verbunden ist, wobei bevorzugt eine Innenseite (3a) des deckelseitigen In-Mould-Labels (16) und/oder das deckelseitige Label (16') zur Herstellung der lösbaren Verbindung beschichtet, lackiert, bedruckt und/oder oberflächenbehandelt ist.

14. Gebinde nach Anspruch 13, bei dem an das deckelseitige In-Mould-Label (16) und/oder an das deckelseitige Label (16') eine Abziehhilfe, bevorzugt eine Abziehlasche (16"), angeformt ist, die bevorzugt in Richtung einer Hochachse des Behälters (2) ausgerichtet ist und/oder die bevorzugt nicht in das Klemmprofil des Deckels (3) hineinragt.

15. Gebinde nach einem der Ansprüche 11 bis 14, bei dem das deckelseitige In-Mould-Label (16) und/oder das deckelseitige Label (16') aus einem lebensmittelkonformen Material gebildet ist, wobei der Deckel (3) bevorzugt zumindest teilweise aus einem Regenerat-Material gebildet ist.

16. Gebinde nach einem der Ansprüche 11 bis 15, bei dem eine Außenseite (16a) des deckelseitigen In-Mould-Labels (16) und/oder des deckelseitigen Labels (16') Oberflächenstrukturen und/oder eine Beschichtung zur Reduzierung der Anhaftung eines Füllguts aufweist.

17. Gebinde nach einem der Ansprüche 11 bis 16, bei dem das deckelseitige In-Mould-Label (16) und/oder das deckelseitige Label (16') eine oder mehrere Folien-Schichten, ein Vlies oder einen Papier-Kunststoffverbund aufweist, ein Laminat bildet und/oder bedruckt ist.

18. Gebinde nach einem der Ansprüche 11 bis 17, bei dem der Deckel (3) an seiner Innenseite (3a) zumindest in einem von dem deckelseitigen In-Mould-Label (16) und/oder von dem deckelseitigen Label (16') überdeckten Teilbereich eine zumindest abschnittsweise plane Fläche bildet.

19. Verfahren zum Herstellen eines Behälters (2) nach einem der Ansprüche 1 bis 10, umfassend:
Anbringen des wandseitigen In-Mould-Labels (6) an einer Mantelfläche (24a) eines Formkerns (24),
Anbringen des bodenseitigen In-Mould-Labels (18) an einer Stirnseite (24b) des Formkerns (24), wobei das bodenseitige In-Mould-Label (18) einen Abschnitt (19) aufweist, der seitlich über die Stirnseite (24b) des Formkerns (24) übersteht,
Bewegen des mit dem wandseitigen In-Mould-Label (6) und dem bodenseitigen In-Mould-Label (18) versehenen Formkerns (24) in eine Matrize (32) eines Formwerkzeugs (31) zur Bildung eines FormHohlraums (23), sowie
Einspritzen von Kunststoff in den Form-Hohlraum (23) ausgehend von mindestens einer Einspritz-Position (P), die der Stirnseite (24b) des Formkerns (24) gegenüberliegt, um den überstehenden Abschnitt (19) des bodenseitigen In-Mould-Labels (18) mit seiner Außenseite (19a) in Überlappung mit einer Innenseite (6b) des wandseitigen In-Mould-Labels (6) zu bringen.

20. Verfahren nach Anspruch 19, weiter umfassend:
Festes Verbinden, insbesondere Verschweißen, des überlappenden Abschnitts (19) des bodenseitigen In-Mould-Labels (18) mit dem wandseitigen In-Mould-Label (6) nach dem Einspritzen des Kunststoffs in den Form-Hohlraum (23), bevorzugt unter Verwendung mindestens eines beheizbaren Kontaktelements (52, 53), das mit der Außenseite (6a) des wandseitigen In-Mould-Labels (6) in Kontakt gebracht wird.

21. Verfahren nach einem der Ansprüche 19 oder 20, weiter umfassend:
Einlegen mindestens eines außenseitigen, bevorzugt wandseitigen In-Mould-Labels (7) in die Matrize (32) des Formwerkzeugs (31) vor dem Einspritzen des Kunststoffs in den Form-Hohlraum (23).

22. Verfahren nach Anspruch 21, weiter umfassend: Festes Verbinden, insbesondere Verschweißen, eines überstehenden Abschnitts (19') eines bodenseitigen Labels (28') mit dem außenseitigen wandseitigen In-Mould-Label (7) nach dem Einspritzen des Kunststoffs in den Form-Hohlraum (23).

## Claims

1. Container (2) made of plastic in the form of a bucket, having a bottom (4) and having an encircling side wall (5), which, in the region of an opening (11) of the container (2), has an encircling rim (12) having an engagement region (13), wherein the engagement region (13) has a clamping profile for interaction with a clamping profile on a lid (3) in order to close the opening (11) of the container (2), wherein at least one in-mould label (6, 18) is attached to an inner side (5a) of the encircling side wall (5) and to an inner side (4a) of the bottom (4),
wherein
an in-mould wall label (6), which extends as far as a contact region (15) with the lid (3), is attached to the inner side (5a) of the side wall (5), and
an in-mould bottom label (18) is attached to the inner side (4a) of the bottom (5), wherein the in-mould bottom label (18) has a section (19) which extends along the inner side (5a) of the side wall (5) and is overlapped on its outer side (19a) by an inner side (6b) of the in-mould wall label (6).

2. Container according to Claim 1, in which the in-mould wall label (6) as a whole is connected detachably to the inner side (5a) of the encircling side wall (5) and/or in which the in-mould bottom label (18) as a whole is connected detachably to the inner side (5a) of the bottom (4) and the side wall (5).

3. Container according to Claim 2, in which a removal aid, preferably a removal tab (6"), is formed integrally on the in-mould wall label (6), the said removal aid covering a partial region of the in-mould wall label (6) on the outer side (6a) thereof and preferably extending into the contact region (15) with the lid (3), wherein the removal aid is preferably formed adjacent to a region of overlap (9), in which two edges (8a, 8b) of the in-mould wall label (6) which lie opposite one another in the circumferential direction overlap and are connected firmly, in particular welded, to one another.

4. Container according to Claim 3, in which the in-mould wall label (6) has a perforation (6‴) in the partial region covered by the removal aid, the said perforation preferably extending adjacent to the region of overlap (9).

5. Container according to one of Claims 2 to 4, in which an inner side (6b) of the in-mould wall label (6) as a whole and/or an inner side (18b) of the in-mould bottom label (18) as a whole is coated, painted, printed and/or surface-treated to produce the detachable connection.

6. Container according to one of the preceding claims, in which an outer side (6a) of the in-mould wall label (6) and/or an outer side (18a) of the in-mould bottom label (18) have/has surface structures and/or a coating (21a, 21b) to reduce the adhesion of filling material.

7. Container according to one of the preceding claims, in which the in-mould bottom label (18) and/or the in-mould wall label (6) are/is produced from a food-compatible material, wherein the container (2) is preferably formed at least partially from a reclaimed material.

8. Container according to one of the preceding claims, which has at least one external in-mould label (7, 28) or external label (28') on an outer side (5b) of the encircling side wall (5) and/or on an outer side (4b) of the bottom (4).

9. Container according to one of the preceding claims, in which the in-mould wall label (6), the in-mould bottom label (18), the external in-mould label (7) and/or the external label (28') have/has one or more film layers, a nonwoven or a paper-plastic composite, form/forms a laminate and/or are/is printed.

10. Container according to one of the preceding claims, in which the in-mould wall label (6), the in-mould bottom label (18), the external in-mould label (7) and/or the external label (28') are/is formed from a preferably transparent material and are printed on their inner side (6b, 18b) and/or on their outer side (6a, 18a).

11. Package (1) comprising:
a container (2) according to one of the preceding claims, and a lid (3) comprising: a clamping profile for interaction with the clamping profile on the engagement region (13) on the encircling rim (12) of the container (2) in order to close the opening (11) of the container (2).

12. Package according to Claim 11, in which the lid (3) has on its inner side (3a) at least one in-mould lid label (16) and/or a label (16') connected to the lid (3) at least in a partial region, which label covers the inner side (3a) of the lid (3) at least as far as the contact region (15) with the container (2).

13. Package according to Claim 11 or 12, in which the in-mould lid label (16) and/or the lid label (16') as a whole is connected detachably to the inner side (3a) of the lid (3), wherein an inner side (3a) of the in-mould lid label (16) and/or the lid label (16') is preferably coated, painted, printed and/or surface-treated to produce the detachable connection.

14. Package according to Claim 13, in which a removal aid, preferably a removal tab (16"), is formed integrally on the in-mould lid label (16) and/or on the lid label (16'), the said removal aid preferably being aligned in the direction of a vertical axis of the container (2) and/or preferably not projecting into the clamping profile of the lid (3).

15. Package according to one of Claims 11 to 14, in which the in-mould lid label (16) and/or the lid label (16') are/is formed from a food-compatible material, wherein the lid (3) is preferably formed at least partially from a reclaimed material.

16. Package according to one of Claims 11 to 15, in which an outer side (16a) of the in-mould lid label (16) and/or of the lid label (16') has surface structures and/or a coating to reduce the adhesion of a filling material.

17. Package according to one of Claims 11 to 16, in which the in-mould lid label (16) and/or the lid label (16') have/has one or more film layers, a nonwoven or a paper-plastic composite, form/forms a laminate and/or are/is printed.

18. Package according to one of Claims 11 to 17, in which, at least in a partial region covered by the in-mould lid label (16) and/or by the lid label (16'), the lid (3) forms on its inner side (3a) a surface that is flat at least in some section or sections.

19. Method for manufacturing a container (2) according to one of Claims 1 to 10, comprising:
applying the in-mould wall label (6) to a lateral surface (24a) of a mould core (24), applying the in-mould bottom label (18) to an end face (24b) of the mould core (24), wherein the in-mould bottom label (18) has a section (19) which projects laterally beyond the end face (24b) of the mould core (24),
moving the mould core (24) provided with the in-mould wall label (6) and the in-mould bottom label (18) into a female die (32) of a mould (31) in order to form a mould cavity (23), and
injecting plastic into the mould cavity (23), starting from at least one injection position (P) situated opposite the end face (24b) of the mould core (24), in order to bring the outer side (19a) of the projecting section (19) of the in-mould bottom label (18) into overlap with an inner side (6b) of the in-mould wall label (6).

20. Method according to Claim 19, further comprising:
firmly connecting, in particular welding, the overlapping section (19) of the in-mould bottom label (18) to the in-mould wall label (6) after the injection of the plastic into the mould cavity (23), preferably using at least one heatable contact element (52, 53), which is brought into contact with the outer side (6a) of the in-mould wall label (6).

21. Method according to either of Claims 19 or 20, further comprising:
inserting at least one external in-mould label (7), preferably an external in-mould wall label, into the female die (32) of the mould (31) before the injection of the plastic into the mould cavity (23).

22. Method according to Claim 21, further comprising: firmly connecting, in particular welding, an overlapping section (19') of a bottom label (28') to the external in-mould wall label (7) after the injection of the plastic into the mould cavity (23).

## Revendications

1. Récipient (2) en matière plastique revêtant la forme d'un seau, comprenant un fond (4) et une paroi latérale périphérique (5) munie, dans la région d'une ouverture (11) dudit récipient (2), d'un rebord périphérique (12) doté d'une zone (13) de venue en prise, laquelle zone (13) de venue en prise comporte un profil de serrage conçu pour coopérer avec un profil de serrage situé sur un couvercle (3), en vue d'obturer ladite ouverture (11) du récipient (2), au moins une étiquette surmoulée (6, 18) étant apposée sur une face intérieure (5a) de la paroi latérale périphérique (5) et sur une face intérieure (4a) du fond (4),
une étiquette surmoulée (6) située côté paroi, s'étendant jusqu'à une zone (15) de contact avec le couvercle (3), étant apposée sur ladite face intérieure (5a) de la paroi latérale (5), et une étiquette surmoulée (18), située côté fond, étant apposée sur ladite face intérieure (4a) du fond (4), laquelle étiquette surmoulée (18), située côté fond, est pourvue d'un pan (19) qui s'étend le long de la face intérieure (5a) de ladite paroi latérale (5) et chevauche, au niveau de sa face extérieure (19a), une face intérieure (6b) de ladite étiquette surmoulée (6) située côté paroi.

2. Récipient selon la revendication 1, dans lequel l'étiquette surmoulée (6) située côté paroi est reliée dans son intégralité, de manière dissociable, à la face intérieure (5a) de la paroi latérale périphérique (5) ; et/ou dans lequel l'étiquette surmoulée (18) située côté fond est reliée dans son intégralité, de manière dissociable, à la face intérieure (5a) du fond (4) et de ladite paroi latérale (5).

3. Récipient selon la revendication 2, dans lequel un auxiliaire d'extraction, de préférence une languette d'extraction (6") faisant corps avec l'étiquette surmoulée (6) située côté paroi, recouvre une région partielle de ladite étiquette surmoulée (6) située côté paroi, au niveau de sa face extérieure (6a), et s'étend préférentiellement jusque dans la zone (15) de contact avec le couvercle (3), ledit auxiliaire d'extraction étant formé, de préférence, dans la contiguïté d'une zone de chevauchement (9) au niveau de laquelle deux arêtes (8a, 8b) de ladite étiquette surmoulée (6) située côté paroi, en vis-à-vis mutuel dans la direction périphérique, se chevauchent et sont reliées rigidement l'une à l'autre, en particulier par soudage.

4. Récipient selon la revendication 3, dans lequel l'étiquette surmoulée (6) située côté paroi est munie, dans la région partielle recouverte par l'auxiliaire d'extraction, d'une perforation (6‴) s'étendant préférentiellement au voisinage de la zone de chevauchement (9).

5. Récipient selon l'une des revendications 2 à 4, dans lequel une face intérieure (6b) de l'étiquette surmoulée (6) située côté paroi et/ou une face intérieure (18b) de l'étiquette surmoulée (18) située côté fond est (sont) revêtue(s), laquée(s), imprimée(s) et/ou soumise(s) à un traitement de surface, dans son (leur) intégralité, en vue d'instaurer la liaison dissociable.

6. Récipient selon l'une des revendications précédentes, dans lequel une face extérieure (6a) de l'étiquette surmoulée (6) située côté paroi et/ou une face extérieure (18a) de l'étiquette surmoulée (18) située côté fond, comporte(nt) des structures de surface et/ou un revêtement (21a, 21b) visant à diminuer l'adhérence d'une substance de remplissage.

7. Récipient selon l'une des revendications précédentes, dans lequel l'étiquette surmoulée (18) située côté fond, et/ou l'étiquette surmoulée (6) située côté paroi, est (sont) fabriquée(s) en un matériau conforme aux normes alimentaires, sachant que ledit récipient (2) est, au moins en partie, préférentiellement constitué d'un matériau recyclé.

8. Récipient conforme à l'une des revendications précédentes et nanti, au niveau d'une face extérieure (5b) de la paroi latérale périphérique (5) et/ou au niveau d'une face extérieure (4b) du fond (4), d'au moins une étiquette surmoulée (7, 28) externe ou d'une étiquette (28') externe.

9. Récipient selon l'une des revendications précédentes, dans lequel l'étiquette surmoulée (6) située côté paroi, l'étiquette surmoulée (18) située côté fond, l'étiquette surmoulée (7) externe, et/ou l'étiquette (28') externe, présente(nt) une ou plusieurs couche(s) de film, un non-tissé ou un composite papier-matière plastique, forme(nt) un stratifié, et/ou est (sont) imprimée(s).

10. Récipient selon l'une des revendications précédentes, dans lequel l'étiquette surmoulée (6) située côté paroi, l'étiquette surmoulée (18) située côté fond, l'étiquette surmoulée (7) externe, et/ou l'étiquette (28') externe, est (sont) constituée(s) d'un matériau préférentiellement transparent et est (sont) imprimée(s) au niveau de sa (leur) face intérieure (6b, 18b) et/ou niveau de sa (leur) face extérieure (6a, 18a).

11. Ensemble combiné (1) comprenant :
un récipient (2) conforme à l'une des revendications précédentes, ainsi qu'un couvercle (3) comportant : un profil de serrage conçu pour coopérer avec le profil de serrage situé au niveau de la zone (13) de venue en prise, sur le rebord périphérique (12) du récipient (2), en vue d'obturer l'ouverture (11) dudit récipient (2).

12. Ensemble combiné selon la revendication 11, dans lequel le couvercle (3) est pourvu, au niveau de sa face intérieure (3a), d'au moins une étiquette surmoulée (16) située côté couvercle et/ou d'une étiquette (16') reliée audit couvercle (3), au moins dans une région partielle, qui recouvre(nt) ladite face intérieure (3a) du couvercle (3), au moins jusqu'à la zone (15) de contact avec le récipient (2).

13. Ensemble combiné selon la revendication 11 ou 12, dans lequel l'étiquette surmoulée (16) située côté couvercle, et/ou l'étiquette (16') située côté couvercle, est (sont) reliée(s) à la face intérieure (3a) dudit couvercle (3), de manière dissociable dans son (leur) intégralité, sachant qu'une face intérieure (3a) de ladite étiquette surmoulée (16) située côté couvercle, et/ou ladite étiquette (16') située côté couvercle, est (sont) préférentiellement revêtue(s), laquée(s), imprimée(s) et/ou soumise(s) à un traitement de surface, en vue d'instaurer la liaison dissociable.

14. Ensemble combiné selon la revendication 13, dans lequel un auxiliaire d'extraction, de préférence une languette d'extraction (16") faisant corps avec l'étiquette surmoulée (16) située côté couvercle, et/ou avec l'étiquette (16') située côté couvercle, est préférentiellement orienté dans la direction d'un axe vertical du récipient (2) et/ou ne pénètre préférentiellement pas dans le profil de serrage dudit couvercle (3).

15. Ensemble combiné selon l'une des revendications 11 à 14, dans lequel l'étiquette surmoulée (16) située côté couvercle, et/ou l'étiquette (16') située côté couvercle, est (sont) constituée(s) d'un matériau conforme aux normes alimentaires, sachant que ledit couvercle (3) est, au moins en partie, préférentiellement constitué d'un matériau recyclé.

16. Ensemble combiné selon l'une des revendications 11 à 15, dans lequel une face extérieure (16a) de l'étiquette surmoulée (16) située côté couvercle, et/ou de l'étiquette (16') située côté couvercle, comporte(nt) des structures de surface et/ou un revêtement visant à diminuer l'adhérence d'une substance de remplissage.

17. Ensemble combiné selon l'une des revendications 11 à 16, dans lequel l'étiquette surmoulée (16) située côté couvercle, et/ou l'étiquette (16') située côté couvercle, présente(nt) une ou plusieurs couche(s) de film, un non-tissé ou un composite papier-matière plastique, forme(nt) un stratifié, et/ou est (sont) imprimée(s).

18. Ensemble combiné selon l'une des revendications 11 à 17, dans lequel le couvercle (3) forme au niveau de sa face intérieure (3a), au moins dans une région partielle recouverte par l'étiquette surmoulée (16) située côté couvercle et/ou par l'étiquette (16') située côté couvercle, une surface plane au moins par zones.

19. Procédé de fabrication d'un récipient (2) conforme à l'une des revendications 1 à 10, consistant à :
mettre en place l'étiquette surmoulée (6), située côté paroi, sur une surface (24a) de l'enveloppe d'un noyau de moule (24),
mettre en place l'étiquette surmoulée (18), située côté fond, sur une face extrême (24b) dudit noyau de moule (24), sachant que ladite étiquette surmoulée (18), située côté fond,
comporte un pan (19) qui fait latéralement saillie au-delà de ladite face extrême (24b) du noyau de moule (24),
mouvoir ledit noyau de moule (24), muni de ladite étiquette surmoulée (6) située côté paroi et de ladite étiquette surmoulée (18) située côté fond, afin de l'introduire dans une matrice (32) d'un outil de moulage (31) en vue de former une cavité de moulage (23), ainsi qu'à injecter de la matière plastique dans ladite cavité de moulage (23), à partir d'au moins un emplacement d'injection (P) situé en vis-à-vis de la face extrême (24b) dudit noyau de moule (24), de façon telle que ledit pan (19) en saillie au-delà de ladite étiquette surmoulée (18) située côté fond soit amené à chevaucher, par sa face extérieure (19a), une face intérieure (6b) de ladite étiquette surmoulée (6) située côté paroi.

20. Procédé selon la revendication 19, consistant par ailleurs à :
relier rigidement, en particulier par soudage, le pan chevauchant (19) de l'étiquette surmoulée (18) située côté fond à l'étiquette surmoulée (6) située côté paroi, à l'issue de l'injection de la matière plastique dans la cavité de moulage (23), de préférence avec utilisation d'au moins un élément de contact (52, 53) qui peut être chauffé et est mis en contact avec la face extérieure (6a) de ladite étiquette surmoulée (6) située côté paroi.

21. Procédé selon l'une des revendications 19 ou 20, consistant par ailleurs à :
insérer dans la matrice (32) de l'outil de moulage (31), préalablement à l'injection de la matière plastique dans la cavité de moulage (23), au moins une étiquette surmoulée (7) externe située, de préférence, côté paroi.

22. Procédé selon la revendication 21, consistant par ailleurs à :
relier rigidement, en particulier par soudage, à l'issue de l'injection de la matière plastique dans la cavité de moulage (23), un pan saillant (19') d'une étiquette (28'), située côté fond, à l'étiquette surmoulée externe (7) située côté paroi.
